# EUROPÄISCHE PATENTSCHRIFT

(11) **EP 2 355 294 B1**
(45) Veröffentlichungstag und Bekanntmachung des Hinweises auf die Patenterteilung: **11.09.2019**
(21) Anmeldenummer: 10194551.7
(22) Anmeldetag: 10.12.2010
(51) Int. Cl.: H02J 3/14, H02J 3/00

(54) **Anpassen von Lastprofilen und Einspeiseprofilen**
Adjustment of load profiles and supply profiles
Adaptation de profilés de charge et de profilés d'alimentation

(30) Priorität: 01.02.2010 DE 102010006527
(43) Veröffentlichungstag der Anmeldung: 10.08.2011
(73) Patentinhaber: innogy Netze Deutschland GmbH, 45128 Essen (DE)
(72) Erfinder: Hammerschmidt, Torsten, 44267, Dortmund (DE); Willing, Stefan, 48249, Dülmen (DE); Gaul, Dr.-Ing., Armin, 59379, Selm (DE)
(74) Vertreter: Cohausz & Florack

(56) Entgegenhaltungen:
- WO-A1-2009/040140
- ARKADIUSZ KORBIK ET AL: "Enabling active distribution networks through decentralised autonomous network management", 18TH INTERNATIONAL CONFERENCE AND EXHIBITION ON ELECTRICITY DISTRIBUTION, 20Q05. CIRED 2005., 6. Juni 2005 (2005-06-06), Seiten 1-5, XP55027009,
- HORST F WEDDE ET AL: "Bottom-Up Self-Organization of Unpredictable Demand and Supply under Decentralized Power Management", SELF-ADAPTIVE AND SELF-ORGANIZING SYSTEMS, 2008. SASO '08. SECOND IEEE INTERNATIONAL CONFERENCE ON, IEEE, PISCATAWAY, NJ, USA, 20. Oktober 2008 (2008-10-20), Seiten 74-83, XP031355544, ISBN: 978-0-7695-3404-6

## Beschreibung

Die Erfindung betrifft die Optimierung des Leistungsflusses in einem elektrischen Netz vor dem Hintergrund eines veränderten Netznutzungsverhaltens.

Heutige Verteilungsnetze sind vor dem Hintergrund geplant und errichtet worden, elektrische Energie von einem zentralen Einspeisepunkt, zum Beispiel von einer hierarchisch vorgelagerten Netzebene oder einem Kraftwerk, zu vielen Verbrauchern zu transportieren, so dass nur eine Energieflussrichtung berücksichtigt wurde. Die Netze wurden auf Basis der den Kunden vertraglich zugesicherten Leistung in Kombination mit deren stochastischem Nutzungsverhalten dimensioniert.

Durch das Aufkommen regenerativer und dezentraler Stromerzeugung kommt es neben der Ausspeisung in Richtung von Verbrauchern auch vermehrt zu Einspeisungen in die Mittel- und Niederspannungsnetze. Aufgrund des variablen Verhaltens von Energie beziehenden Verbrauchern und Energie einspeisenden Erzeugern ergeben sich über der Zeit variable Last- und Einspeiseprofile, die vom elektrischen Netz getragen werden müssen.

Bei Verbrauchern und Erzeugern mit vergleichsweise geringen Leistungen wird in der Regel auf die Messung des tatsächlichen Last- bzw. Einspeiseverhaltens verzichtet und seitens der Netzbetreiber ein standardisiertes Durchschnittsprofil verwendet, um beispielsweise die vom Netzbetreiber in das elektrische Netz einzuspeisende Leistung zu kalkulieren. Dabei wird unterstellt, dass seitens der Mittel- und Niederspannungsnetze jeder gewünschte Lastfluss jederzeit realisierbar ist.

Aufgrund der dezentralen und oftmals, wie zum Beispiel im Fall von Photovoltaikanlagen, stark variablen Einspeisung in das elektrische Netz sowie des flexiblen Nutzungsverhaltens elektrischer Verbraucher seitens der Kunden ist zu erwarten, dass die Abbildung des Verhaltens von am elektrischen Netz betriebenen Verbrauchern und Erzeugern auf statistisch gemittelte Leistungsflussprofile zunehmend ungenau sein wird. Wird dem nicht entgegengesteuert, müssen größere Regelleistungen vorgehalten werden, was technisch aufwendig und kostenintensiv ist. Zudem kann eine Dimensionierung auf höhere Maximalleistungsflüsse beim Netzausbau notwendig sein, wenn ohne neue Ansätze beim Leistungsflussmanagement die Energieeinspeise- und Energiebezugswünsche der Netzkunden bedient werden sollen.

Aus dem Artikel "Enabling Active Distribution Networks through Decentralised Autonomous Network Management" von Arkadiusz Korbik et al., veröffentlicht in "18th International Conference and Exhibition on Electricity Distribution 2005, CIRED 2005" ist ein Konzept für das Management elektrischer Netze bekannt, bei dem an Netzknoten vorhandene Agenten zum Einsatz kommen. Zwischen den Agenten findet mittels eines Broadcastverfahrens ein Informationstransfer statt. Dabei werden Informationen von einem Agenten an einem Knoten des elektrischen Netzes zu einem Agenten an einem anderen Knoten des Netzes weitergegeben, so dass der Agent des hierarchisch höchsten Knotens des elektrischen Netzes alle ausgetauschten Informationen sammeln kann. Für den Fall einer Leistungsabgabe, welche die zulässige maximale Leistungsabgabe an ein mit dem hierarchisch höchsten Knoten verbundenes übergeordnetes Netz übersteigt, hat eine Anpassung dieser Leistungsabgabe stattzufinden. In welcher Weise diese Anpassung konkret erfolgen soll bestimmt der dem hierarchisch höchsten Knoten zugeordnete Agent. Es werden dann konkrete Anpassungswerte ("adjustment values") von diesem Agenten an die Agenten der hierarchisch niedrigeren Knoten weitergeleitet. Bei übermäßiger Leistungsaufnahme aus dem übergeordneten Netz wird analog vorgegangen.

Der Artikel "Bottom-Up Self-Organization of Unpredictable Demand and Supply under Decentralized Power Management" von Horst F. Wedde et al., veröffentlicht in "Second IEEE International Conference on Self-Adaptive and Self-Organizing Systems", S. 74-83 lehrt die Verwendung eines "balancing group managers" für die Koordination des Verhaltens von Verbrauchern und Erzeugern einer Gruppe.

Die WO 2009/040140 A1 offenbart ein Konzept, das beinhaltet, dass jeder Wechsel der Leistungsabgabe oder der Leistungsaufnahme einen Handelsakt voraussetzt, der zwischen für diesen Zweck vorgesehenen Agenten stattfindet.

Es stellt sich die Aufgabe, vor dem Hintergrund eines veränderten Netznutzungsverhaltens den Leistungsfluss in einem elektrischen Netz zu optimieren.

Die Erfindung löst diese Aufgabe durch ein Verfahren gemäß Anspruch 1, Steuermittel für Verbraucher und Erzeuger gemäß den Ansprüchen 15 und 16, derartig ausgerüstete Verbraucher und Erzeuger nach den Ansprüchen 17 und 18, eine Kommunikationsplattform nach Anspruch 19 sowie ein System nach Anspruch 20. Alle technischen Merkmale der unabhängigen Ansprüche sind erforderlich und nicht optional, unabhängig von dem widersprechenden Aussagen in den folgenden Textpassagen. Bevorzugte Ausführungsformen werden in den abhängigen Ansprüchen beschrieben.

Das Verfahren gemäss Anspruch 1 umfasst das Gruppieren von zumindest einem Erzeuger und zumindest einem Verbraucher, die mit einem elektrischen Netz verbunden sind, zu einer Gruppe; das Bereitstellen von Lastprofilen durch die Verbraucher der Gruppe auf einer Kommunikationsplattform; das Bereitstellen von Einspeiseprofilen durch die Erzeuger der Gruppe auf der Kommunikationsplattform; das Bereitstellen eines vorgegebenen Gruppenprofils auf der Kommunikationsplattform; das verbraucherseitige Abrufen der Lastprofile, der Einspeiseprofile und des Gruppenprofils und das verbraucherseitige Anpassen des Lastprofils des jeweiligen Verbrauchers der Gruppe basierend auf den abgerufenen Lastprofilen, den abgerufenen Einspeiseprofilen und dem abgerufenen Gruppenprofil; und das erzeugerseitige Abrufen der Lastprofile, der Einspeiseprofile und des Gruppenprofils und das erzeugerseitige Anpassen des Einspeiseprofils des jeweiligen Erzeugers der Gruppe basierend auf den abgerufenen Lastprofilen, den abgerufenen Einspeiseprofilen und dem abgerufenen Gruppenprofil.

Die Verbraucher und Erzeuger der Gruppe können als Gruppenmitglieder bezeichnet werden.

Lastprofile können unterschiedliche Informationen umfassen. Einer ersten Variante entsprechend kann ein Lastprofil für einen gewissen Zeitraum, auf den es sich bezieht, für jeden Zeitpunkt einen konkreten Wert für die Leistungsaufnahme des Verbrauchers aus dem Netz angeben, so dass das Lastprofil durch Zeit-Leistungs-Wertepaare beschrieben wird, die auch als mathematische Funktion ausgedrückt sein können. Der Zeitraum kann z.B. einen Tag betragen, so dass sich das Lastprofil als Tageslastgang darstellt. Dabei kann für Verbraucher, deren genaues Lastverhalten innerhalb des Zeitraums nicht bekannt ist, das Lastprofil auf einer Prognose basieren, die ggf. aufgrund von Messwerten der tatsächlichen Leistungsaufnahme aktualisiert werden kann. Ein Lastprofil kann ersatzweise oder zusätzlich durch zu erwartende Maximal- und/oder Minimalwerte der Leistungsaufnahme beschrieben werden. Die zeitliche Auflösung innerhalb eines Lastprofils muss nicht gleichbleibend sein. So kann beispielsweise für Zeitintervalle, in denen die Leistungsaufnahme eines Verbrauchers nicht für eine Mehrzahl von Zeitpunkten mit hinreichender Genauigkeit prognostiziert werden kann, nur eine kumulierte Leistungsaufnahme konkret, als Maximalwert und/oder als Minimalwert im Lastprofil spezifiziert sein.

Die Einspeiseprofile der Erzeuger der Gruppe können ähnlich gestaltet sein, wobei an die Stelle der Leistungsaufnahme aus dem elektrischen Netz die Leistungsabgabe an das elektrische Netz rückt.

Das Gruppenprofil kann beispielsweise für ein Zeitintervall Grenzwerte für den Leistungsfluss aus der Gruppe in das elektrische Netz und/oder für den Leistungsfluss aus dem elektrischen Netz in die Gruppe festlegen. Es kann zum Beispiel durch den Netzbetreiber des elektrischen Netzes vorgegeben werden. Ein Energieversorgungsunternehmen, dessen Kunden über die Verbraucher und Erzeuger der Gruppe verfügen, kann ebenfalls für die Vorgabe des Gruppenprofils verantwortlich sein. Ebenso können Dritte, die weder Netzbetreiber noch Energieversorgungsunternehmen sind, das Gruppenprofil vorgegeben.

Dadurch, dass die Verbraucher der Gruppe ihre Lastprofile auf der Kommunikationsplattform bereitstellen und die Erzeuger der Gruppe ihre Einspeiseprofile auf der Kommunikationsplattform bereitstellen, können durch das verbraucherseitige bzw. das erzeugerseitige Abrufen dieser Profile die Last- und Einspeiseprofile der Gruppenmitglieder unter den Gruppenmitgliedern kommuniziert werden. Weiterhin können die Gruppenmitglieder das Gruppenprofil von der Kommunikationsplattform abrufen. Dadurch wird ermöglicht, dass ein verbraucherseitiges Anpassen der Lastprofile der Verbraucher der Gruppe basierend auf den abgerufenen Lastprofilen, den abgerufenen Einspeiseprofilen und dem abgerufenen Gruppenprofil erfolgt. Anders ausgedrückt können die Verbraucher der Gruppe ihr Verhalten autonom an dem Verhalten der übrigen Gruppenmitglieder unter Berücksichtigung des Gruppenprofils ausrichten. Ebenso wird ermöglicht, dass ein erzeugerseitiges Anpassen der Einspeiseprofile der Erzeuger der Gruppe basierend auf den abgerufenen Lastprofilen, den abgerufenen Einspeiseprofilen und dem abgerufenen Gruppenprofil erfolgen kann und auch die Erzeuger der Gruppe ihr Verhalten autonom an dem Verhalten der übrigen Gruppenmitglieder unter Berücksichtigung des Gruppenprofils ausrichten können.

Dabei kann die Anpassung des Lastprofils eines Verbrauchers der Gruppe beispielsweise in der Weise erfolgen, dass die Leistungsaufnahme des Verbrauchers zu einem bestimmten Zeitpunkt, zu dem aufgrund des nicht angepassten Lastprofils des Verbrauchers, der Lastprofile der übrigen Verbraucher der Gruppe und der Einspeiseprofile der Erzeuger der Gruppe ein höhere Leistungsaufnahme der Gruppe aus dem elektrischen Netz erfolgen würde als dies vom Gruppenprofil für den betreffenden Zeitpunkt vorgesehen ist, reduziert wird, im angepassten Lastprofil des Verbrauchers für diesen Zeitpunkt also eine geringere Leistungsaufnahme vorgesehen wird. Speisen die Erzeuger mehr Leistung in das elektrische Netz ein, als die Verbraucher dem Netz zunächst zu entnehmen planen, können Verbraucher durch Anpassung ihrer Profile ihre Leistungsaufnahme erhöhen, z.B. indem sie eine Betriebsphase, die zuvor für einen späteren Zeitpunkt eingeplant war, vorverlegen. Somit können die Verbraucher die Funktion von Energiespeichermitteln, die ansonsten die überschüssige Leistung aufnehmen könnten, übernehmen.

Die Anpassung des Einspeiseprofils eines Erzeugers der Gruppe kann zum Beispiel so gestaltet werden, dass der Erzeuger in seinem angepassten Einspeiseprofil vorsieht, in einem Zeitintervall, in dem, nach den Lastprofilen der Verbraucher der Gruppe und den Einspeiseprofilen der übrigen Erzeuger der Gruppe zu urteilen, eine aus dem elektrischen Netz von der Gruppe entnommene Leistung nah an der gemäß dem Gruppenprofil maximal zulässigen Leistung liegt, die volle durch den Erzeuger in dem Intervall voraussichtlich erzeugte Leistung, in das elektrische Netz einzuspeisen. Im entgegen gesetzten Fall, d.h. bei in den Lastprofilen für einen Zeitraum veranschlagter zu geringer Leistungsaufnahme, kann analog im angepassten Einspeiseprofil des Erzeugers eingeplant werden, keine oder nur eine geringe Leistung an das elektrische Netz abzugeben, während die übrige erzeugte Leistung z.B. dem Erzeuger zugeordneten Energiespeichermitteln zugeführt wird. Um ein Beispiel zu geben, kann der Erzeuger auf dem Dach eines Einfamilienhauses montierte Photovoltaikmodule umfassen, denen als Energiespeichermittel Blei-Gel-Batterien zugeordnet sind.

Beispielsweise kann ein Netzbetreiber oder Dienstleister über das Gruppenprofil vorgeben, welche Leistungsaufnahme der Gruppe aus dem elektrischen Netz zu welchem Zeitpunkt und/oder welche Leistungseinspeisung von der Gruppe in das elektrische Netz zu welchem Zeitpunkt maximal zulässig oder minimal erforderlich ist. Auf diese Weise kann erreicht werden, dass das Verhalten der Gruppe auf einer logisch übergeordneten Ebene, beispielsweise auf der Ebene des Gesamtnetzes, nicht mehr ausschließlich dem Zufall überlassen bleibt, sondern sich an dem Gruppenprofil ausrichtet. Es kann also einheitlich für die Gruppenmitglieder über das Gruppenprofil ein Richtverhalten vorgegeben werden, das diese dann über die Anpassung ihrer Profile umsetzen. Das Verhalten der Gruppenmitglieder kann dann als selbstorganisiertes Leistungsflussmanagement verstanden werden. Die somit gewonnene Vorhersehbarkeit des von der Gruppe verursachten Leistungsflusses erlaubt eine geringere Regelleistung vorzuhalten. Durch die Vorgabe eines entsprechenden Gruppenprofils lässt sich der durch die Gruppenmitglieder hervorgerufene maximale Leistungsfluss reduzieren, so dass auch die Anforderungen an die Netzinfrastruktur herabgesetzt werden können. Weiterhin kann eine optimale Kapazitätsauslastung erreicht sowie Frequenz- und Spannungshaltung bewirkt werden.

Das Gruppieren von Verbrauchern und Erzeugern zu einer Gruppe kann dahingehend verstanden werden, dass nach erfolgtem Gruppieren zumindest ein Gerät, d.h. zumindest ein Verbraucher oder zumindest ein Erzeuger der Gruppe angehört. In diesem Fall kann das Gruppenprofil ausschließlich den einen Verbraucher betreffen. Insbesondere kann aber auch vorgesehen sein, dass der Gruppe zumindest ein Verbraucher und zumindest ein Erzeuger angehört. Das Gruppieren von Erzeugern und Verbrauchern zu einer Gruppe kann auf unterschiedlichste Weisen durchgeführt werden. Um nur eine Möglichkeit aufzuzeigen, kann die Gruppierung z.B. anhand von Positionsdaten der Verbraucher bzw. der Erzeuger vorgenommen werden. Ein weiteres Kriterium kann sein, dass Verbraucher und Erzeuger, die Kunden eines bestimmten Energieversorgungsunternehmens zugeordnet sind, gruppiert werden.

Das Gruppieren kann sowohl dynamisch als auch statisch erfolgen. Beim statischen Gruppieren kann beim Anschluss eines Verbrauchers oder eines Erzeugers dieser entweder manuell oder automatisch einer Gruppe zugeordnet werden. Beim dynamischen Gruppieren kann während des Betriebes eines Erzeugers oder Verbrauchers dieser automatisch jeweils einer von verschiedenen Gruppen zugeordnet werden. Es können sowohl Gruppierungsvorgaben durch den Netzbetreiber des elektrischen Netzes, durch ein Energieversorgungsunternehmen, das nicht Netzbetreiber ist, oder durch Dritte gemacht werden als auch seitens der Erzeuger oder Verbraucher entschieden werden, ob sie sich einer Gruppe anschließen wollen und ggf. welche Gruppe aus einer Mehrzahl von Gruppen dabei gewählt werden soll.

Es wird keinerlei Beschränkung bezüglich der Art der Verbraucher gemacht, solange eine Anpassung ihres Lastprofils möglich ist. Dazu kann es ausreichen, dass der Verbraucher einschaltbar und ausschaltbar ist, so dass über eine entsprechende zeitliche Steuerung des Ein- und Ausschaltens die Leistungsaufnahme zwischen null und dem Leistungsbedarf im eingeschalteten Zustand variierbar ist. Insbesondere kann es sich aber um solche Verbraucher handeln, deren Lastprofil in gewissen Grenzen angepasst werden kann, ohne das sich daraus ein Komfortverlust für den Benutzer des Verbrauchers ergibt, bzw. dass der Komfortverlust für den Benutzer tolerierbar gering ausfällt.

Ebenso können im Rahmen der Erfindung verschiedenste Erzeuger zu einer Gruppe gruppiert werden und ihr Einspeiseprofil anpassen. Insbesondere kann ein Erzeuger ein dezentraler Erzeuger sein, der möglicherweise nicht der unmittelbaren Kontrolle durch ein Energieversorgungsunternehmen oder durch den Betreiber des elektrischen Netzes untersteht. Um nur einige Beispiele zu nennen, kann ein Erzeuger z.B. sein: eine Windkraftanlage, eine Photovoltaikanlage, eine Geothermieanlage, ein Biomasseheizkraftwerk oder ein mit einem Brennstoff, z.B. einem fossilen Brennstoff oder Wasserstoff im Fall einer Brennstoffzelle, betriebenes Stromerzeugungsaggregat sein.

Zur Anpassung des Einspeiseprofils derartiger Erzeuger können unterschiedliche Maßnahmen ergriffen werden. Eine Möglichkeit besteht in dem gezielten Ein- bzw. Ausschalten eines Erzeugers innerhalb bestimmter Zeitintervalle, was beispielsweise bei einem mit einem Brennstoff betriebenen Stromerzeugungsaggregat einfach umsetzbar sein kann. Weiterhin kann erzeugte Energie Energiespeichermitteln, z.B. einer Batterie, zugeführt werden, anstatt sie in das elektrische Netz einzuspeisen. Dabei muss nicht die volle Leistung, die der Erzeuger abgibt, an die Speichermittel abgegeben werden, sondern es kann diesen auch nur Teil der Leistung zugeführt werden, während der übrige Teil in das elektrische Netz eingespeist wird. Alternativ kann die vom Erzeuger erzeugte Leistung ungenutzt bleiben, wenn sie nicht an das elektrische Netz abgegeben werden soll. Im Fall einer Windkraftanlage kann es möglich sein, z.B. durch eine Blattwinkelregelung zu beeinflussen, welche Leistung durch die Windkraftanlage erzeugt und damit in das elektrische Netz eingespeist wird.

Bei dem elektrischen Netz kann es sich z.B. um ein Niederspannungsnetz, ein Mittelspannungsnetz, ein Hochspannungsnetz, ein Höchstspannungsnetz oder um die Gesamtheit verschiedener dieser Netze handeln. Die Gruppenmitglieder einer Gruppe sind dabei mit demselben, d.h. einem gemeinsamen elektrischen Netz verbunden.

Im Rahmen der Erfindung kann die Kommunikationsplattform verschiedenartig implementiert werden. Beispielsweise kann ein Server, mit dem Verbraucher und Erzeuger sowie zum Beispiel der Netzbetreiber des elektrischen Netzes, ein Energieversorgungsunternehmen, das nicht Netzbetreiber des elektrischen Netzes ist, oder Dritte kommunizieren können und auf dem ein Computerprogramm abläuft, das die Lastprofile, die Einspeiseprofile und das Gruppenprofil verwaltet, als Kommunikationsplattform dienen. Die Kommunikationsplattform kann aber auch aus mehreren Kommunikationseinrichtungen bestehen, auf denen jeweils nur einige der Last- und Einspeiseprofile der Verbraucher bzw. Erzeuger der Gruppe bereitgestellt und von diesen abrufbar sind. Eine von allen Gruppenmitgliedern erreichbare zentrale Kommunikationseinrichtung kann zum Bereitstellen und Abrufen von Profilen auf die übrigen Kommunikationseinrichtungen verweisen, indem sie z.B. Adressangaben oder Bereiche von Lokalisierungsangaben mit entsprechender Gruppenzuordnung vorhält, und als Hinterlegungsinstanz für das Gruppenprofil dienen.

Die Kommunikationsplattform kann drahtlos oder drahtgebunden mit den Verbrauchern und den Erzeugern kommunizieren. Das elektrische Netz kann als Transportweg für die Kommunikation dienen (sog. Powerline-Kommunikation). Eine Vielzahl verschiedener Protokolle kann zum Einsatz kommen. Zum Beispiel kann die Kommunikation über das Global System for Mobile Communications Protokoll (GSM), das Universal Mobile Telecommunications System Protokoll (UMTS), das General Packet Radio Service Protokoll (GPRS), das Long Term Evolution Protokoll (LTE) oder ein sonstiges Mobilfunkprotokoll erfolgen. Ebenso können Netzwerkprotokolle für die drahtgebundene, wie z.B. auf dem Standard IEEE 802.3 (engl. Local Area Network, LAN) basierende Protokolle, oder drahtlose Kommunikation, wie z.B. auf dem Standard IEEE 802.11 (engl. Wireless Local Area Network, WLAN) basierende Protokolle, eingesetzt werden. Auf diesen Protokollen können auf höheren Schichten weiter Protokolle wie das Internet Protocol (IP) und das Transmission Control Protocol (TCP) aufsetzen. Die Kommunikationssprache kann beispielsweise Smart Message Language (SML) sein. Andere Kommunikationssprachen, wie Device Language Message Specification (DLMS), Extensible Markup Language (XML), HyperText Markup Language (HTML) oder dergleichen sind ebenfalls möglich.

Aus Gründen des Datenschutzes kann die Kommunikation mit der Kommunikationsplattform verschlüsselt stattfinden. Auch können von Verbrauchern und Erzeugern übermittelte Daten verschlüsselt auf der Kommunikationsplattform bereitgestellt werden.

Das Abrufen der Einspeiseprofile, der Lastprofile und des Gruppenprofils durch die Verbraucher und Erzeuger der Gruppe, kann autonom durch die Gruppenmitglieder selbst oder durch die Kommunikationsplattform initiiert werden. Im Kontext der zweiten Variante können die übrigen Gruppenmitglieder beispielsweise zu einem Profilabruf veranlasst werden, wenn von einem Gruppenmitglied ein verändertes Profil auf der Kommunikationsplattform bereitgestellt wurde. Das Bereitstellen eines veränderten Gruppenprofils kann das Abrufen des Gruppenprofils durch alle Gruppenmitglieder hervorrufen. In der umgekehrten Richtung können die Gruppenmitglieder das Bereitstellen von Last- bzw. Einspeiseprofilen entweder selbständig vornehmen oder es kann durch die Kommunikationsplattform initiiert werden, die z.B. die Gruppenmitglieder in bestimmten Zeitabständen auffordert, Last- bzw. Einspeiseprofile an sie zu übermitteln.

Verbraucherseitiges Abrufen der Lastprofile, der Einspeiseprofile und des Gruppenprofils kann z.B. bedeuten, dass der Verbraucher direkt mit der Kommunikationsplattform kommuniziert. Andererseits kann die Kommunikation aber auch über zwischengeschaltete Instanzen erfolgen. So kann im Fall eines Verbrauchers, der über eine Einrichtung eines Gebäudeautomationssystems steuerbar ist, das Abrufen der Profile zunächst durch diese Einrichtung erfolgen, die die Profile dann entweder den Verbraucher weiterleitet, oder auch das Anpassen des Lastprofils des Verbrauchers basierend auf den abgerufenen Lastprofilen, den abgerufenen Einspeiseprofilen und dem abgerufenen Gruppenprofil durch entsprechendes Regeln bzw. Steuern vornimmt. Verbraucherseitiges Anpassen des Lastprofils kann jedoch auch bedeuten, dass der Verbraucher über ihm exklusiv zugeordnete Steuermittel verfügt, die den Anpassvorgang ausführen. Das erzeugerseitige Abrufen der Profile und das Anpassen des Einspeiseprofils kann in analoger Weise durchgeführt werden.

Verbraucherseitiges bzw. Erzeugerseitiges Anpassen von Profilen kann insbesondere dahingehend verstanden werden, dass das Anpassen der Profile nicht durch eine zentrale Instanz, die etwa vom Netzbetreiber des elektrischen Netzes oder von einem Energieversorgungsunternehmen kontrolliert wird, sondern dezentral und autonom seitens der Gruppenmitglieder erfolgt. Hierdurch kann zum Beispiel der Aufwand für ein hierarchisches Steuerungssystem, wie es heute in der Hoch- und Höchstspannung üblich ist, überflüssig gemacht werden.

Da über die Lastprofile und die Einspeiseprofile das zukünftig zu erwartende elektrische Verhalten der Verbraucher und der Erzeuger der Gruppe erfasst werden kann, und da über das Gruppenprofil das zukünftig anzustrebende elektrische Verhalten der Gruppenmitglieder nach außen festgelegt werden kann, können die Gruppenmitglieder den von der Gruppe nach außen verursachten Leistungsfluss überblicken und ihre zukünftige Leistungsaufnahme aus dem elektrischen Netz bzw. ihre zukünftige Leistungsabgabe an das elektrische Netz durch Anpassen ihres Lastprofils bzw. ihres Einspeiseprofils an dem Gruppenprofil ausrichten. Es kann daher ausreichen, zum Übermitteln der Last- und Einspeiseprofile an die Kommunikationsplattform eine Infrastruktur zu nutzen, die nicht echtzeitfähig ist, da durch die vorausschauenden Profilanpassungen kurzfristige Last- und Einspeiseanpassungen nicht erforderlich sein können.

Selbst bei Nichtverfügbarkeit der Kommunikationsplattform kann die Wahrscheinlichkeit einer erheblichen Beeinträchtigung des elektrischen Netzes durch den von den Gruppenmitgliedern bewirkten Leistungsfluss gering sein. Zwar können in einem solchen Szenario Last- bzw. Einspeiseprofile von Verbrauchern und Erzeugern, die währenddessen an das elektrische Netz angeschlossen werden und der Gruppe zugeordnet sind oder zumindest bei Verfügbarkeit der Kommunikationsplattform zugeordnet würden, ggf. nicht durch Anpassen der Profile der Gruppenmitglieder berücksichtigt werden. Dennoch kann zumindest durch eine zuvor erfolgte Anpassung der Profile der Verbraucher und Erzeuger das Einhalten der Vorgaben des Gruppenprofils weitgehend gesichert sein. Die neu hinzugekommenen Erzeuger und Verbraucher können dann mit voreingestellten Profilen betrieben werden, die das Verhalten der Gruppenmitglieder für die Dauer der Nichtverfügbarkeit der Kommunikationsplattform außer Acht lassen.

Fällt die Verbindung eines Netzstrangs des elektrischen Netzes, mit dem die Gruppenmitglieder unmittelbar verbunden sind, zu einem hierarisch oberhalb dieses Netzstrangs angeordneten Netzstrang aus, können die Gruppenmitglieder ggf. im Inselbetrieb weiterbetrieben werden, indem durch die Anpassung ihrer Profile die Gruppenmitglieder dafür sorgen, dass sich vor dem Hintergrund der Leistungsaufnahme bzw. Leistungsabgabe ggf. vorhandener nicht zu einer Gruppe gehöriger Erzeuger bzw. Verbraucher, die ebenfalls an den Netzstrang angeschlossen sind, die in den Netzstrang eingespeiste und aus dem Netzstrang entnommene Leistung die Waage halten.

Die obige Aufgabe, vor dem Hintergrund eines veränderten Netznutzungsverhaltens den Leistungsfluss in einem elektrischen Netz zu optimieren, wird weiterhin gelöst durch einen Verbraucher nach Anspruch 17, der mit einem elektrischen Netz verbindbar ist und zu einer Gruppe gruppierbar ist; dem Kommunikationsmittel zugeordnet sind, die eingerichtet sind, ein Lastprofil des Verbrauchers auf einer Kommunikationsplattform bereitzustellen, auf der weiterhin Einspeiseprofile zu der Gruppe gruppierter Erzeuger, die mit dem elektrischen Netz verbunden sind, bereitstellbar sind, Lastprofile möglicher weiterer Verbraucher der Gruppe bereitstellbar sind und ein vorgegebenes Gruppenprofil bereitstellbar ist, und die eingerichtet sind, die Lastprofile, die Einspeiseprofile und das Gruppenprofil von der Kommunikationsplattform abzurufen; und dem Steuermittel zugeordnet sind, die eingerichtet sind, das Lastprofil des Verbrauchers basierend auf den abgerufenen Lastprofilen, den abgerufenen Einspeiseprofilen und dem abgerufenen Gruppenprofil anzupassen.

Zudem wird die Aufgabe gelöst durch einen Erzeuger nach Anspruch 18, der mit einem elektrischen Netz verbindbar ist und zu einer Gruppe gruppierbar ist; dem Kommunikationsmittel zugeordnet sind, die eingerichtet sind, ein Einspeiseprofil des Erzeugers auf einer Kommunikationsplattform bereitzustellen, auf der weiterhin Lastprofile möglicher zu der Gruppe gruppierter Verbraucher, die mit dem elektrischen Netz verbunden sind, bereitstellbar sind, Einspeiseprofile möglicher weiterer Erzeuger der Gruppe bereitstellbar sind und ein vorgegebenes Gruppenprofil bereitstellbar ist, und die eingerichtet sind, die Lastprofile, die Einspeiseprofile und das Gruppenprofil von der Kommunikationsplattform abzurufen; und dem Steuermittel zugeordnet sind, die eingerichtet sind, das Einspeiseprofil des Erzeugers basierend auf den abgerufenen Lastprofilen, den abgerufenen Einspeiseprofilen und dem abgerufenen Gruppenprofil anzupassen.

Weiterhin wir die Aufgabe gelöst durch Steuermittel für einen Verbraucher nach Anspruch 15, der mit einem elektrischen Netz verbindbar ist und zu einer Gruppe gruppierbar ist, wobei die Steuermittel eingerichtet sind, dem Verbraucher zugeordnete Kommunikationsmittel zu veranlassen, ein Lastprofil des Verbrauchers auf einer Kommunikationsplattform bereitzustellen, auf der weiterhin Einspeiseprofile möglicher zu der Gruppe gruppierter Erzeuger, die mit dem elektrischen Netz verbunden sind, bereitstellbar sind, Lastprofile möglicher weiterer Verbraucher der Gruppe bereitstellbar sind und ein vorgegebenes Gruppenprofil bereitstellbar ist; die Steuermittel eingerichtet sind, die Kommunikationsmittel zu veranlassen, die Lastprofile, die Einspeiseprofile und das Gruppenprofil von der Kommunikationsplattform abzurufen; die Steuermittel eingerichtet sind, das Lastprofil des Verbrauchers basierend auf den abgerufenen Lastprofilen, den abgerufenen Einspeiseprofilen und dem abgerufenen Gruppenprofil anzupassen.

Außerdem wird die Aufgabe gelöst durch Steuermittel für einen Erzeuger nach Anspruch 16, der mit einem elektrischen Netz verbindbar ist und zu einer Gruppe gruppierbar ist, wobei die Steuermittel eingerichtet sind, dem Erzeuger zugeordnete Kommunikationsmittel zu veranlassen, ein Einspeiseprofil des Erzeugers auf einer Kommunikationsplattform bereitzustellen, auf der weiterhin Lastprofile möglicher zu der Gruppe gruppierter Erzeuger, die mit dem elektrischen Netz verbunden sind, bereitstellbar sind, Einspeiseprofile möglicher weiterer Erzeuger der Gruppe bereitstellbar sind und ein vorgegebenes Gruppenprofil bereitstellbar ist; die Steuermittel eingerichtet sind, die Kommunikationsmittel zu veranlassen, die Lastprofile, die Einspeiseprofile und das Gruppenprofil von der Kommunikationsplattform abzurufen; die Steuermittel eingerichtet sind, das Einspeiseprofil des Erzeugers basierend auf den abgerufenen Lastprofilen, den abgerufenen Einspeiseprofilen und dem abgerufenen Gruppenprofil anzupassen.

Die Kommunikationsmittel können dabei z.B. als Mobilfunkmodul oder als Netzwerkmodul für die drahtlose oder drahtgebundene Kommunikation ausgestaltet sein. Die Steuermittel können unter anderem als integrierter Schaltkreis, beispielsweise als anwendungsspezifische integrierte Schaltung (engl. application specific integrated circuit, ASIC), als Mikroprozessor, als FPGA (engl. field programmable gate array) oder als digitaler Signalprozessor (engl. digital signal processor, DSP) ausgestaltet sein. Auch können Datenspeichermittel, beispielsweise Speicher mit wahlfreiem Zugriff (engl. random access memory, RAM) oder Festwertspeicher (engl. read only memory, ROM) vorgesehen sein, die Programmcode mit Instruktionen enthalten, die bei Ausführung auf dem integrierten Schaltkreis die Anpassung eines Last- bzw. eines Einspeiseprofils veranlassen, wobei der Speicher mit wahlfreiem Zugriff während des Programmablaufs erzeugte Operanden aufnehmen kann. Die Steuermittel können zum Anpassen eines Profils auch eine Regelungsfunktion ausüben. Die Kommunikationsmittel und die Steuermittel können beispielsweise mit dem Verbraucher bzw. Erzeuger in einem gemeinsamen Gehäuse angeordnet sein oder sie können außerhalb des Verbrauchers bzw. Erzeugers, z.B. in einer Einrichtung eines Gebäudeautomationssystems, angeordnet sein und lediglich mit dem Verbraucher bzw. Erzeuger in Verbindung stehen. Auch eine geteilte Anordnung von Kommunikations- und Steuermitteln ist möglich.

Schließlich wird die Aufgabe gelöst durch eine Kommunikationsplattform nach Anspruch 19, auf der Lastprofile von Verbrauchern und Einspeiseprofile von Erzeugern bereitstellbar sind, wobei die Verbraucher und die Erzeuger mit einem elektrischen Netz verbunden sind und zu einer Gruppe gruppiert sind, und auf der ein vorgegebenes Gruppenprofil bereitstellbar ist; von der die Lastprofile, die Einspeiseprofile und das Gruppenprofil verbraucherseitig zum verbraucherseitigen Anpassen des Lastprofils des jeweiligen Verbrauchers der Gruppe basierend auf den abgerufenen Lastprofilen, den abgerufenen Einspeiseprofilen und dem abgerufenen Gruppenprofil abrufbar sind; und von der die Lastprofile, die Einspeiseprofile und das Gruppenprofil erzeugerseitig zum erzeugerseitigen Anpassen des Einspeiseprofils des jeweiligen Erzeugers der Gruppe basierend auf den abgerufenen Lastprofilen, den abgerufenen Einspeiseprofilen und dem abgerufenen Gruppenprofil abrufbar sind.

Ausführungsbeispiele der Erfindung sehen vor, dass die Verbraucher der Gruppe ihre angepassten Lastprofile und/oder die Erzeuger der Gruppe ihre angepassten Einspeiseprofile auf der Kommunikationsplattform bereitstellen.

Hierdurch wird die Möglichkeit eröffnet, dass seitens der Gruppenmitglieder die angepassten Last- bzw. Einspeiseprofile abgefragt werden können und auf diese Weise die Gruppenmitglieder über den aktuellen Status innerhalb der Gruppe informiert werden können. Zudem wird erlaubt, dass einzelne oder alle Gruppenmitglieder ihre Profile unter Berücksichtung der abgerufenen angepassten Profile erneut anpassen, um eine iterative Annährung des elektrischen Verhaltens der Gruppenmitglieder insgesamt an das Gruppenprofil zu erreichen. Auch können eventuell zu einem späteren Zeitpunkt neu zu der Gruppe gruppierte Verbraucher bzw. Erzeuger eine Profilanpassung basierend auf einer aktualisierten Datenlage vornehmen.

Beispielhaften Ausführungsformen der Erfindung entsprechend erfolgt das Gruppieren von Verbrauchern und/oder Erzeugern zu einer Gruppe auf Basis der Topologie des elektrischen Netzes.

Beispielsweise können Verbraucher und Erzeuger, die einer bestimmten Netzkomponente zugeordnet sind, die z.B. an denselben Niederspannungsstrang des elektrischen Netzes angeschlossen sind oder die derselben Ortsnetzstation zugeordnet sind, zueinander gruppiert werden. Dies erlaubt dem Netzbetreiber, über die Vorgabe eines geeigneten Gruppenprofils sicherzustellen, dass die Kapazitätsgrenzen der jeweiligen Netzkomponente durch das elektrische Verhalten der Gruppenmitglieder nicht verletzt werden. Für den Fall der Netzkomponente Niederspannungsstrang kann dies unter anderem bedeuten, dass der von den Gruppenmitgliedern verursachte Leistungsfluss im Rahmen der Transportkapazität des Niederspannungsstrangs bleibt. Die Bildung von auf der Topologie des Netzes basierenden Gruppen kann erlauben, dass, wenn über das Gruppenprofil Grenzen für den Leistungsfluss in die Gruppe und oder aus der Gruppe gesetzt werden, die Effizienz der Energieverteilung erhöht wird, weil etwa in einem Spannungsstrang für ein Angleichen von eingespeister und entnommener Leistung gesorgt wird. Hieraus können sich verschiedene Vorteile ergeben, wie z. B. die Reduktion von Netzverlusten, eine CO₂-Einsparung und Kostenvorteile für den Netzbetreiber.

Gemäß einem Ausführungsbeispiel stellen Verbraucher und Erzeuger Identifikationsdaten auf der Kommunikationsplattform bereit, anhand derer das Gruppieren der Verbraucher und Erzeuger zu einer Gruppe erfolgt.

Dies kann das effiziente und zügige Gruppieren der Verbraucher und Erzeuger erlauben. Dabei müssen nicht alle Verbraucher bzw. Erzeuger, die Identifikationsdaten bereitstellen, zwangsläufig auch tatsächlich einer Gruppe zugeordnet werden. Identifikationsdaten können unter anderem auch Angaben darüber umfassen, ob es sich bei dem jeweiligen Gerät um einen Verbraucher oder um einen Erzeuger handelt.

Zum Abfragen der Lastprofile, der Einspeiseprofile und des Gruppenprofils der Gruppe kann ein Gruppenmitglied dann beispielsweise seine Identifikationsdaten an die Kommunikationsplattform übertragen, die im Gegenzug anhand aller dort bereitgestellten Identifikationsdatensätze die Gruppe feststellt, zu der anfragende Verbraucher bzw. Erzeuger gruppiert ist, und die übrigen Gruppenmitglieder ermittelt und anschließend das Gruppenprofil und die Profile der übrigen Gruppenmitglieder in Richtung des anfragenden Gruppenmitglieds überträgt. Alternativ kann jedem Verbraucher bzw. Erzeuger eine Gruppe ein entsprechender Gruppenidentifikator zugewiesen werden, der zum Abfragen von Profilen verwendet wird.

Im Rahmen eines Ausführungsbeispiels umfassen die Identifikationsdaten Lokalisationsdaten.

Um nur einige Varianten zu erwähnen, können zu den Lokalisationsdaten geografische Positionsangaben gehören, die die Position eines Verbrauchers bzw. Erzeugers auf der Erdoberfläche, z.B. in Gauß-Krüger-Koordinaten, beschreiben, so dass Verbraucher und Erzeuger innerhalb eines bestimmten Gebiets zu einer Gruppe zusammengefasst werden können.

Andererseits können die Lokalisationsdaten die Position eines Verbrauchers bzw. Erzeugers auch anhand seiner Anordnung im elektrischen Netz beschreiben. Insbesondere können dabei mehrere Verbraucher bzw. Erzeuger auf dieselben Lokalisationsdaten abgebildet werden, wenn das Gruppieren von Verbrauchern und/oder Erzeugern zu einer Gruppe auf Basis der Topologie des elektrischen Netzes erfolgen soll, und z.B. die Zuordnung eines Verbrauchers bzw. Erzeugers zu einer bestimmten Netzkomponente, wie z.B. einer Ortsnetzstation, über seine Lokalisationsdaten bestimmt. Eine weitere Möglichkeit besteht darin, die Kennung eines intelligenten Stromzählers zu Lokalisationszwecken zu verwenden, so dass alle Verbraucher bzw. Erzeuger, für die gilt, dass die von ihnen hervorgerufenen Leistungsflüsse von dem intelligenten Stromzähler erfasst werden, durch identische Lokalisationsdaten gekennzeichnet werden. Da Verbraucher bzw. Erzeuger, die einem intelligenten Stromzähler zugeordnet sind, in der Regel auch an derselben Stelle in der Netztopologie angeordnet sind, kann die Kennung eines intelligenten Stromzählers geeignet sein, zum Gruppieren von Verbrauchern und Erzeugern auf Basis der Topologie des elektrischen Netzes herangezogen zu werden.

Zur Gewinnung der Lokalisationsdaten können den Verbrauchern bzw. Erzeugern entsprechende Mittel, beispielsweise ein Empfänger für Signale eines globalen Navigationssatellitensystem (engl. Global Navigation Satellite System, GNSS) oder Mittel zum Beziehen der Kennung eines zugehörigen intelligenten Stromzählers, zugeordnet sein. Auch kann ein Konfigurationsvorgang erforderlich sein, der das Hinterlegen von Lokalisationsdaten umfasst und etwa beim ersten Anschließen des Verbrauchers bzw. Erzeugers an das elektrische Netz durch einen Benutzer zu erfolgen hat.

Ausführungsbeispiele sehen vor, dass die auf der Kommunikationsplattform bereitgestellten Identifikationsdaten wiederholt abgefragt werden und bei Bedarf ein erneutes Gruppieren der zugehörigen Verbraucher und Erzeuger anhand der abgefragten Identifikationsdaten erfolgt.

Wird zum Beispiel ein Verbraucher bzw. Erzeuger neu an das elektrische Netz angeschlossen oder wird ein zuvor deaktiviertes Gerät eingeschaltet, können die Identifikationsdaten dieses Geräts auf der Kommunikationsplattform bereitgestellt werden. Die für das Gruppieren von Verbrauchern und Erzeugern verantwortliche Instanz, z.B. der Netzbetreiber des elektrischen Netzes, kann durch wiederholtes Abfrage der auf der Kommunikationsplattform bereitgestellten Identifikationsdaten, beispielsweise in einem vorgegebenen Takt, den Überblick über die am Netz betriebenen Verbraucher bzw. Erzeuger behalten. Es kann festgestellt werden, ob ein am Netz betriebener Verbraucher bzw. Erzeuger hinzugekommen ist und in diesem Fall durch ein erneutes Gruppieren der zugehörigen Verbraucher und Erzeuger anhand der abgefragten Identifikationsdaten das neu hinzugekommene Gerät in eine Gruppe eingegliedert werden. Ebenso kann ein deaktiviertes Gerät, dessen Identifikationsdaten im Zuge der Deaktivierung von der Kommunikationsplattform entfernt wurde, aus einer Gruppe ausgegliedert werden.

Gemäß einer beispielhaften Ausführungsform findet ein Auswahlprozess statt, der darüber entscheidet, ob ein Verbraucher oder Erzeuger einer Gruppe zugeordnet wird.

Hat der Auswahlprozess für einen bestimmten Verbraucher bzw. Erzeuger zum Ergebnis, dass er keiner Gruppe zugeordnet wird, findet eine Anpassung seines Lastprofils bzw. Einspeiseprofils nicht statt, so dass er stets unabhängig von der Situation im elektrischen Netz nach einem ihm immanenten oder durch einen Benutzer vorgegebenen Profil arbeitet. Durch den Auswahlprozess können daher Verbraucher bzw. Erzeuger von der Profilanpassung ausgenommen werden. Solche Verbraucher und Erzeuger können als inaktive Verbraucher bzw. Erzeuger bezeichnet werden, da bei ihnen keine Profilanpassung erfolgt. Verbraucher und Erzeuger die zu einer Gruppe gruppiert sind, können als aktive Verbraucher bzw. Erzeuger bezeichnet werden.

Verbraucher bzw. Erzeuger, für die zu einem bestimmten Zeitpunkt eine festgelegte Leistungsaufnahme bzw. Leistungsabgabe gefordert wird (zeitkritische Verbraucher, z.B. Kommunikationstechnik, bzw. zeitkritische Erzeuger) können mittels des Auswahlprozesses als inaktiv gekennzeichnet werden, während zeitunkritische Verbraucher bzw. Erzeuger als aktiv gekennzeichnet werden.

Sofern gewollt und technisch möglich können Verbraucher bzw. Erzeuger, die aufgrund des Auswahlprozesses keiner Gruppe zugeordnet werden, dennoch Last- bzw. Einspeiseprofile auf der Kommunikationsplattform bereitstellen, die dann bei der Anpassung der Last- bzw. Einspeiseprofile der Gruppenmitglieder der Gruppe, der die nicht ausgewählten Verbraucher bzw. Erzeuger im Fall ihrer Auswahl zugeordnet worden wären, berücksichtigt werden können. Verbraucher bzw. Erzeuger deren Last- bzw. Einspeiseprofile überhaupt nicht angepasst werden können, können im Rahmen des Auswahlprozesses nicht ausgewählt werden.

Im Rahmen einer beispielhaften Ausführungsform wird der Auswahlprozess auf der Basis von Benutzervorgaben durchgeführt. So kann der Benutzer, der über einen Verbraucher bzw. Erzeuger verfügt, entscheiden, ob bei diesem Gerät eine Profilanpassung erfolgen soll oder nicht. So kann insbesondere bei Verbrauchern sichergestellt werden, dass der Benutzer keine Komfortverluste erleiden muss, wie es etwa passieren könnte, wenn aufgrund einer Lastprofilanpassung die Leistungsaufnahme eines Beleuchtungssystems, und damit die Helligkeit in einem Raum, unter den vom Benutzer gewünschten Wert fiele. Der Benutzer kann Geräte dauerhaft oder nur für einen bestimmten Zeitraum von der Zuordnung zu einer Gruppe ausnehmen.

Alternativ zu einem Auswahlprozess auf der Basis von Benutzervorgaben können auch die Verbraucher dahingehend konfiguriert sein, Vorgaben bezüglich einer gewünschten oder nicht gewünschten Gruppenzuordnung zu machen.

Es ist vorgesehen, dass für zumindest einen Verbraucher der Gruppe Freiheitsgrade angegeben sind, innerhalb derer das Lastprofil des Verbrauchers anpassbar ist, und für zumindest einen Erzeuger der Gruppe Freiheitsgrade angegeben sind, innerhalb derer das Einspeiseprofil des Erzeugers anpassbar ist. Handelt es sich bei dem Verbraucher zum Beispiel um einen Kühlschrank, der eingestellt ist, eine festgelegte Maximaltemperatur in seinem Innenraum nicht zu überschreiten, kann dies bedeuten, dass das Kühlaggregat zum Reduzieren der Leistungsaufnahme innerhalb eines Zeitintervalls abgeschaltet wird, um in diesem Intervall ein Herabsetzen der Leistungsaufnahme aus dem elektrischen Netz im angepassten Lastprofil zu erreichen. Damit die Maximaltemperatur eingehalten wird, kann im angepassten Lastprofil für ein späteres Zeitintervall, zu dem die Maximaltemperatur voraussichtlich nur noch knapp unterschritten wird, entsprechend eine gesteigerte Lastaufnahme eingeplant werden, so dass die Kühlleistung des Kühlaggregats dann erhöht ist. Die Maximaltemperatur beschreibt hier die Freiheitsgrade, die für die Lastprofilanpassung des Kühlschranks bestehen. Grundgedanke bei einem solchen Vorgehen ist also, die Lastaufnahme des Kühlschranks im Rahmen der gegebenen Freiheitsgrade zeitlich anzupassen, um dem zeitlichen Verlauf der Leistungsaufnahme der übrigen Verbraucher der Gruppe aus dem elektrischen Netz und dem zeitlichen Verlauf der Leistungsabgabe der Erzeuger der Gruppe an das elektrische Netz vor dem Hintergrund des Gruppenprofils Rechnung zu tragen.

Als ein weiteres Beispiel können die Freiheitsgrade, innerhalb derer das Lastprofil eines System, das über redundante Komponenten verfügt, anpassbar ist sich daraus ergeben, dass eine redundante Komponente für eine bestimmte Dauer vollständig abgeschaltet wird, um die Leistungsaufnahme des Systems abzusenken.

Die Freiheitsgrade, innerhalb derer das Einspeiseprofil eines Erzeugers anpassbar ist, können zum Beispiel durch die maximale Leistungsaufnahme dem Erzeuger zugeordneter Energiespeichermittel definiert sein, die die maximal mögliche Reduktion der vom Erzeuger in das elektrische Netz eingespeisten Leistung gegenüber der vom Erzeuger erzeugten Leistung, bei der keine erzeugte Leistung ungenutzt bleibt, beschreiben kann.

Die Angabe von Freiheitsgraden erlaubt das bezüglich des jeweiligen Verbrauchers bzw. Erzeugers individualisierte Anpassen des Last- bzw. Einspeiseprofils.

Es kann vorgesehen sein, die Freiheitsgrade auf der Kommunikationsplattform bereitzustellen, damit seitens anderer Gruppenmitglieder kalkulierbar wird, in welchem Rahmen das Last- bzw. Einspeiseprofil des Verbrauchers bzw. Erzeugers, für dessen Betrieb die Freiheitsgrade bestehen, anpassbar ist. Dies kann dann bei der Anpassung der Profile der anderen Gruppenmitglieder berücksichtigt werden. Stellen mehrere Gruppenmitglieder Informationen zu den Freiheitsgraden ihres Betriebs zur Verfügung, kann dies beispielsweise dem Netzbetreiber des elektrischen Netzes erlauben, abzuschätzen, in welchen Grenzen die Profile der Gruppemitglieder anpassbar sind, d.h. wie flexibel die Gruppe in ihrem elektrischen Verhalten ist.

Entsprechend einer beispielhaften Ausführungsform sind die Freiheitsgrade für einen Verbraucher durch die durch den Verbraucher dem elektrischen Netz innerhalb eines festgelegten Maximalzeitraums zu entnehmende Energie festgelegt.

Angewandt auf eine zu ladende Batterie als Verbraucher kann dementsprechend die der Batterie aus dem elektrischen Netz zugeführte Leistung in Abhängig von den Lastprofilen der übrigen Verbraucher der Gruppe und den Einspeiseprofilen der Erzeuger der Gruppe variiert werden, wobei die Variationsmöglichkeiten durch Festlegen einer Uhrzeit, zu der die Batterie vollständig geladen sein soll, eingeschränkt werden. Aus dem anfänglichen Ladezustand der Batterie und dem Umstand, dass eine vollständige Batterieladung anzustreben ist, ergibt sich die durch den Verbraucher dem elektrischen Netz zu entnehmende Energie; die Uhrzeit, zu der die Batterie vollständig geladen sein soll, bestimmt zusammen mit dem Zeitpunkt der Initialisierung des Ladevorgangs den Maximalzeitraum, in dem die Energie dem elektrischen Netz zu entnehmen ist.

Eine derartige Festlegung der Freiheitsgrade kann bewirken, dass die Anforderungen eines Benutzers, der über den Verbraucher verfügt, erfüllt werden - im Kontext des obigen Beispiels also, dass die Batterie zum gewünschten Zeitpunkt geladen ist, und dennoch eine Anpassung des Lastprofils möglich ist und das Verhalten des Verbrauchers an den Anforderungen des Gruppenprofils ausgerichtet werden kann.

Im Zusammenhang mit dem obigen Beispiel können die Freiheitsgrade zusätzlich z.B. durch eine Obergrenze für die technisch zulässige Leistungsaufnahme der Batterie eingeschränkt sein.

Einem Verbraucher der Gruppe sind Speichermittel zugeordnet, in denen zumindest ein Lastprofil für den Verbraucher hinterlegt ist, und es sind einem Erzeuger der Gruppe Speichermittel zugeordnet, in denen zumindest ein Einspeiseprofil für den Erzeuger hinterlegt ist.

Bei den Speichermitteln kann es sich z.B. um einen Flash-Speicher, einen magnetischen Speicher oder um einen optischen Speicher handeln. Ein in den Speichermitteln hinterlegtes Profil kann das Verhalten des jeweiligen Geräts festlegen, wenn keine Profilanpassung erfolgt oder es kann als Ausgangspunkt für eine Profilanpassung dienen, indem beispielsweise im Rahmen einer Profilanpassung Teile des hinterlegten Profils verändert werden.

Es ist ferner vorgesehen, dass einem Verbraucher der Gruppe Speichermittel zugeordnet sind, in denen zumindest zwei Lastprofile für den Verbraucher hinterlegt sind, wobei das Anpassen des Lastprofils des Verbrauchers die Auswahl eines der hinterlegten Lastprofile umfasst, und/oder dass einem Erzeuger der Gruppe Speichermittel zugeordnet sind, in denen zumindest zwei Einspeiseprofile für den Erzeuger hinterlegt sind, wobei das Anpassen des Einspeiseprofils des Erzeugers die Auswahl eines der hinterlegten Einspeiseprofile umfasst.

Ein ausgewähltes Profil kann entweder unmittelbar verwendet werden, oder lediglich als Grundlage für die Bestimmung eines angepassten Profils dienen. Vorteilhaft kann bei dieser Ausgestaltung sein, dass die Auswahl eines Last- bzw. Einspeiseprofils schnell ablaufen kann, da nicht notwendigerweise erst ein geeignetes Profil berechnet werden muss. Überdies können möglicherweise verbraucher- bzw. erzeugerseitige Steuermittel zur Profilanpassung eingesetzt werden, die eine geringere Komplexität aufweisen.

Ein Ausführungsbeispiel der Erfindung sieht vor, dass für zumindest einen Verbraucher der Gruppe Zuverlässigkeitsinformationen im Lastprofil angegeben sind und/oder für zumindest einen Erzeuger der Gruppe Zuverlässigkeitsinformationen im Einspeiseprofil angegeben sind.

Zuverlässigkeitsinformationen können etwa die Wahrscheinlichkeit beschreiben, dass die für einen oder mehrer Zeitpunkte im Lastprofil angegebene Leistungsaufnahme zutreffend bemessen ist oder Varianzen von konkreten Leistungsaufnahmewerten, Maximalwerten oder Minimalwerten beschreiben. Analog gilt dies für Einspeiseprofile.

Mittels Zuverlässigkeitsinformationen kann abgeschätzt werden, wie verlässlich das durch das Gruppenprofil beschriebene Gesamtverhalten der Gruppenmitglieder eintreten wird. Bei geringer Verlässlichkeit kann z.B. durch den Netzbetreiber eine größere Regelleistung für die Gruppenmitglieder eingeplant werden. Außerdem kann beispielsweise ein Gruppenmitglied auf das wenig verlässliche Profil eines anderen Gruppenmitglieds reagieren, indem es sein Profil derart anpasst, dass selbst bei maximal ungünstigem Verhalten des Gruppenmitglieds mit dem wenig verlässlichen Profil im Mittel über diese beiden Gruppenmitglieder ein angemessenes elektrisches Verhalten erreicht wird.

Ferner sind zumindest seitens eines Teils der Verbraucher und Erzeuger der Gruppe Regeln festgelegt, die vorgeben, wie in Abhängigkeit von den abgerufenen Lastprofilen, den abgerufenen Einspeiseprofilen und dem abgerufenen Gruppenprofil die Anpassung des jeweiligen Lastprofils bzw. Erzeugerprofils zu erfolgen hat. Dazu können Steuermittel, die eingerichtet sind, eine Profilanpassung verbraucher- bzw. erzeugerseitig vorzunehmen, entsprechend konfiguriert sein. Mittels der Ausführungsform kann eine verbesserte Vorhersehbarkeit des Verhaltens von Gruppenmitgliedern bei der Profilanpassung erzielbar sein, wofür nachstehend einige Beispiele gegeben werden. Es kann Gruppenmitgliedern so ohne zusätzlichen Kommunikationsaufwand ermöglicht werden, bei der Anpassung ihrer Profile das Verhalten anderer Gruppenmitglieder zu berücksichtigen. In der Folge kann sich eine verlässliche Anpassung des elektrischen Verhaltens der Gruppenmitglieder an die Vorgaben des Gruppenprofils einstellen.

Die Regeln können beinhalten, dass bei einer anderenfalls zu hohen Leistungsentnahme aus dem elektrischen Netz durch die Verbraucher der Gruppe, d.h. bei Kapazitätsauslastung, alle Verbraucher, die Energiespeicher sind, z.B. Wärmespeicher oder Fahrzeugbatterien von Elektroautos, die Dauer ihrer Ladevorgänge derart ausdehnen, dass diese jeweils erst zum spätesten zulässigen Zeitpunkt abgeschlossen sind. Reicht dies nicht aus, um die Leistungsentnahme auf das erforderliche Maß zu reduzieren, können die Verbraucher durch ein geeignetes mathematisches Verfahren ihren Leistungsbezug aus Zeiten mit Kapazitätsauslastung in Zeiten mit freier Kapazität verschieben. Sollte trotz dieser Anpassungen die Kapazität nicht einzuhalten sein, kann die im Lastprofil der Verbraucher vorgesehene Leistungsaufnahme ungeachtet eventuell angegebener Freiheitsgrade, in denen sich die Anpassung normalerweise bewegen soll, um den gleichen Prozentsatz, z.B. in Schritten von 2%, reduziert werden, bis die Vorgaben des Gruppenprofils eingehalten werden.

Zeigt das Gruppenprofil die Möglichkeit einer erhöhten Leistungsaufnahme an, etwa weil ab einem bestimmte Zeitpunkt, eine verringerte Leistungsaufnahme anderer Verbraucher im Netz zu erwarten ist, können Regeln festgelegt sein, die die Verbraucher veranlassen, ihre Lastprofile so anzupassen, dass innerhalb kurzer Zeit, z.B. innerhalb von 2 Minuten, der Leistungsbezug auf den gewünschten Wert erhöht wird.

Sind entsprechende Regeln vorgesehen, können die Gruppenmitglieder bei plötzlichem Spannungs- und/oder Frequenz und/oder Kurzschlussleistungsabfall, die z.B. durch entsprechende verbraucher- bzw. erzeugerseitige Mittel detektierbar sein können, so reagieren, dass der Inselbetrieb der Gruppenmitglieder möglich wird, dass also die Verbraucher der Gruppe nur soviel Leistung aufnehmen, wie die Erzeuger der Gruppe abgeben. Da die Profile der Gruppenmitglieder durch Abrufen von der Kommunikationsplattform allen Gruppenmitglieder bekannt sein können, kann schon vor dem Eintritt eines solchen Ereignisses von den Gruppenmitgliedern ermittelt werden, wie sie sich konkret bei einem solchen Ereignis zu verhalten haben, d.h. wie sie ihre Profile anpassen können, was eine zügige Reaktion ermöglicht.

Ferner ist vorgesehen, dass zumindest für einen Teil der Verbraucher und Erzeuger der Gruppe Prioritäten vorgegeben sind, wobei zunächst die Verbraucher und Erzeuger mit der niedrigsten Priorität ihre Last- bzw. Einspeiseprofile anpassen.

Die Prioritäten können z.B. seitens der Verbraucher bzw. Erzeuger in Form von Prioritätskennungen vorgegeben sein. Die Prioritätskennungen können auf der Kommunikationsplattform bereitgestellt werden, so dass ein Gruppenmitglied die Prioritätskennungen der übrigen Gruppenmitglieder, z.B. mit deren Profilen, abfragen kann. Eine Prioritätskennung kann Bestandteil von Identifikationsdaten sein. Wenn beispielsweise die eigene Priorität die niedrigste aller Gruppenmitglieder ist, passt ein Verbraucher bzw. Erzeuger sein Profil an. Das angepasste Profil kann auf der Kommunikationsplattform bereitgestellt werden. Sollte über die erfolgte Profilanpassung ein Einhalten der Vorgaben des Gruppenprofils durch die Gruppenmitglieder nicht erreicht worden sein, können im nächsten Schritt die Gruppenmitglieder mit der nächsthöheren Priorität ihre Profile anpassen usw. Die Prioritäten können beispielsweise vom Benutzer, von einem Energieerzeugungsunternehmen oder von dem Netzbetreiber des elektrischen Netzes vorgegeben werden. Die Vorgabe kann auf regulatorischen Vorschriften beruhen.

Mittels entsprechender Prioritätenvorgabe kann z.B. erreicht werden, dass zunächst solche Verbraucher bzw. Erzeuger ihre Profile anpassen, bei denen eine Profilanpassung für den Benutzer der Geräte tolerierbare Komfortverluste bewirkt.

Bei einem Ausführungsbeispiel der Erfindung wird regenerativen Erzeugern eine höhere Priorität zugewiesen als nicht regenerativen Erzeugern.

Soll z.B. dem Überschreiten eines im Gruppenprofil festgelegten maximalen Leistungsflusses aus der Gruppe in das elektrische Netz entgegengewirkt werden, können aufgrund der vorgegebenen Prioritäten zunächst die Einspeiseprofile nicht regenerativer Erzeuger derart angepasst werden, dass deren Leistungsabgabe reduziert wird. So kann erreicht werden, dass ein Maximum der Leistungsaufnahme der Verbraucher der Gruppe durch die Leistungsabgabe regenerativer Erzeuger, z.B. Windkraft- oder Photovoltaikanlagen, gedeckt wird.

Einer beispielhaften Ausführungsform entsprechend, ist im Gruppenprofil der von Verbrauchern und/oder Erzeugern, die keiner Gruppe zugeordnet sind, verursachte Leistungsfluss berücksichtigt.

So kann es sich bei den Verbrauchern bzw. Erzeugern, die keiner Gruppe zugeordnet sind, beispielsweise um solche Geräte handeln, die zwar das Kriterium, anhand dessen die Gruppierung erfolgt, z.B. die Anordnung innerhalb der Netztopologie oder die geografische Position, erfüllen, die aber im Rahmen eines Auswahlprozesses, der darüber entscheidet, ob ein Verbraucher oder Erzeuger einer Gruppe zugeordnet wird, nicht ausgewählt wurden. Soll über die Anpassung von Last- bzw. Einspeiseprofilen an ein Gruppenprofil etwa erreicht werden, dass die an einen Niederspannungsstrang angeschlossenen Verbraucher und Erzeuger, sich so verhalten, dass nur eine bestimmte Maximalleistung von außen zugeführt werden muss, kann dies durch Berücksichtigung des von Verbrauchern und/oder Erzeugern, die keiner Gruppe zugeordnet sind, verursachten Leistungsflusses im Gruppenprofil erreicht werden. Zur Abschätzung dieses Leistungsflusses kann ggf. auf Daten bzw. statistische Erwartungswerte zurückgegriffen werden, die z.B. den Leistungsfluss am selben Datum des Vorjahres, bei ähnlicher Wetterlage oder dergleichen beschreiben.

Gemäß einem Ausführungsbeispiel ist vorgesehen, dass das Gruppenprofil basierend auf einer Zustandserfassung zumindest eines Teils des elektrischen Netzes angepasst wird.

So kann über das Gruppenprofil ermöglicht werden, dass die Verbraucher und Erzeuger der Gruppe ihr Verhalten an die tatsächliche Netzsituation anpassen. Ist z.B. das Gruppieren von Verbrauchern und Erzeugern zu einer Gruppe auf Basis der Topologie des elektrischen Netzes erfolgt, sind beispielsweise die Verbraucher und Erzeuger der Gruppe an denselben Niederspannungsstrang angeschlossen, und wird von den Verbrauchern in einem anderen Niederspannungsstrang, der mit demselben Mittelspannungsstrang verbunden ist, eine hohe Leistung aus dem Netz benötigt, was durch die Erfassung des Zustands des zweiten Niederspannungsstrangs festgestellt wird, kann über die Anpassung des Gruppeprofils der Gruppe aus Verbrauchern und Erzeugern des ersten Niederspannungsstrangs auf eine geringer Leistungsaufnahme der Gruppenmitglieder von außen hingewirkt werden. So kann einem Spannungs- und Frequenzabfall im elektrischen Netz entgegengesteuert werden. Beispielsweise kann eine Anpassung des Gruppenprofils vorgenommen werden, wenn die gemessene Spannung 8% unter die Nennspannung abgefallen ist.

Ist im Gruppenprofil der von Verbrauchern und/oder Erzeugern, die keiner Gruppe zugeordnet sind, verursachte Leistungsfluss berücksichtigt, kann durch Messung des Leistungsflusses in den Niederspannungsstrang bzw. aus dem Niederspannungsstrang zu einem bestimmten Zeitpunkt und der Differenz der Summe der möglicherweise für diesen Zeitpunkt in den Last- und Einspeiseprofilen der Gruppenmitglieder angegebenen Leistungen, auf den Leistungsfluss, der von Verbrauchern und/oder Erzeugern, die keiner Gruppe zugeordnet sind, verursacht wird, geschlossen werden. Ausgehend von dieser Information kann durch Schätzung die Prognose für das Verhalten der Verbrauchern und/oder Erzeuger, die keiner Gruppe zugeordnet sind, verbessert werden.

Ausführungsbeispiele der Erfindung können im Rahmen der Organisation von Strom-Lastflüssen in Mittel- und Niederspannungsnetzen, aber auch in Hoch- und Höchstspannungsnetze angewendet werden.

Durch die Entwicklung regenerativ und dezentral erzeugen Stromes kommt es neben der Ausspeisung in Richtung Last auch vermehrt zu Einspeisungen in die Mittel- und Niederspannungsnetze. Zudem lassen sich Stromanwendungen in zeitkritische (Kommunikationstechnik, Beleuchtung) und zeitunkritische (Wärmeanwendungen) unterteilen, so dass eine Vielzahl von Lasten und Einspeisern mit unterschiedlichen Last-/Einspeiseprofilen am Netz flexibel betreibbar sind.

Damit stellt sich die Frage, ob der Summenlastfluss aller Kunden (Verbraucher und Einspeiser) in einem Netz eine zufällige Größe bleibt, oder ob die aktiven Verbraucher/Einspeiser ihr Regelverhalten in Bezug auf den Strombezug / die Stromeinspeisung auch von ihrer Umgebung (den Verhältnissen im Netz, nahe gelegenen zeitgleich aktiven Verbrauchern/Einspeisern) abhängig machen. Ausführungsbeispiele der Erfindung präsentieren hierzu ein technisches Konzept, wie Lastflüsse lokal organisiert werden können. Dazu werden aktive Verbraucher/Einspeiser in ein wirtschaftlich ausgerichtetes Gesamtsystem eingebunden. Das Verhalten jedes einzelnen aktiven Verbrauchers/Einspeisers wirkt unterstützend in Bezug auf die globalen Aufgaben des Systems (optimale Kapazitätsauslastung, Reduzierung von Regelleistung, Spannungs- und Frequenzhaltung,...). Die aktiven Verbraucher/Einspeiser organisieren sich im Rahmen der o. g. globalen Vorgaben selbst.

Beispielhafte Ausführungsformen der Erfindung geben ein Verfahren zur lokalen Organisation optimaler Lastflüsse in Bezug auf globale Vorgaben an. Um diese Funktionalität zu erreichen, sind dabei keine Anweisungen einer zentralen Institution erforderlich. Die Kommunikation der aktiven Kunden erfolgt entsprechend einem Ausführungsbeispiel über ein offenes Kommunikationssystem vergleichbar der Kommunikation von Computern über das Internet. Die Kommunikationsprotokolle und -techniken sind dabei zwar bekannt, öffentlich und abgestimmt, die Erfindung funktioniert aber prinzipiell mit allen Techniken, die die o.g. Anforderungen erfüllen. Auch ist eine drahtgebundene wie drahtfreie Kommunikation auf Basis entsprechender Standards möglich. Als Beispiel für eine standardisierte offene Kommunikationsplattform wird im Folgenden stellvertretend für die dafür erforderliche Technik einschließlich aller geeigneten Kommunikationsprotokolle vom Internet gesprochen.

Mit dem Begriff "aktive Verbraucher/Einspeiser" können sowohl aktive Verbrauchseinrichtungen eines Kunden wie auch aktive Einspeiseanlagen eines Kunden bezeichnet werden. Das Merkmal "aktiv" kann dabei die Eigenschaft der Flexibilität in dem Strombezug / der Stromeinspeisung im Rahmen bestimmter Systemgrenzen beschreiben (z.B. produziert eine Photovoltaikanlage (PV-Anlage) nur tagsüber bei entsprechender Witterung Strom). Diesbezüglich kann ein Kunde aktive und nicht-aktive Verbraucher/Einspeiser haben. Die Beleuchtung kann ein Beispiel für einen nicht-aktiven Verbraucher sein, da diese möglicherweise zeitlich und in der Leistungshöhe nicht ohne Komforteinbußen des Kunden variiert werden kann. D. h. ein Kunde kann frei sein in der Entscheidung, welche seiner Verbrauchs- und Einspeiseeinrichtungen er - vielleicht auch nur zeitlich eingeschränkt - als flexibel und damit aktiv kennzeichnen möchte. Gegebenenfalls greifen zukünftig aber auch politische/regulatorische Vorgaben in die Selbstbestimmung der Kunden ein, in dem bestimmte Geräte/Stromanwendungen nur aktiv betrieben werden dürfen.

Ausführungsbeispiele der Erfindung sehen vor, dass sich die aktiven Verbraucher/Einspeiser - ähnlich einem Computer im Internet - selbstständig auf der Kommunikationsplattform anmelden. Bei dieser Anmeldung können unter anderem folgende Informationen auf der Kommunikationsplattform bereitgestellt werden:
- Typ: Einspeiser/Verbraucher
- Anschlussleistung/max. Leistung
- Notwendiger Energieaustausch mit dem Netz
- Zulässiger Zeitraum des Energieaustausches
- Charakteristik des Energieaustausches (Tageslastgang)
- Wahrscheinlichkeit des Eintreffens des geplanten Energieaustausches (Tageslastgang)
- Ortsangabe /Koordinaten des Anschlusspunktes

Ähnlich wie bei der Erstellung einer Homepage können diese Informationen bereitgestellt werden, ohne dass der Nutzer dieser Informationen und der Nutzungszeitraum bekannt sind.

Beispielsweise sind von einer PV-Anlage damit folgende Informationen allgemein verfügbar:
- Wahrscheinliches Einspeiseprofil der PV-Anlage (Tageslastgang), das auf Basis der lokalen Wettervorhersage (z.B. Wetter-direkt ö.ä.), der Sonnenscheindauer, dem Datum, der Ausrichtung- und Maximalleistung der Anlage und ggf. historischer Daten (z.B. Einspeisung gestern, letztes Jahr, bei gleicher Bewölkung,...), usw. von der Anlage ermittelt worden ist.
- Anschlusspunkt der PV-Anlage im Netz (z. B. Gauss-Krüger-Koordinaten, o.ä.).

Beispielsweise sind von von einem Elektroauto oder einer Waschmaschine sind damit folgende Informationen verfügbar:
- Erforderlicher Energiebedarf: ... kWh,
- Minimaler Zeitraum des Energiebezugs: ... Minuten,
- Maximaler Zeitraum des Energiebezugs: ... Minuten,
- Minimale Bezugsleistung: ... kW,
- Maximale Bezugsleistung: ... kW,
- Vom Gerät vorgeschlagenes Lastprofil (Tageslastgang),
- Anschlusspunkt des Verbrauchers im Netz.

Der maximale Zeitraum des Energiebezugs kann dabei vom Nutzer vorgegeben werden, in dem er bestimmt, wann das Auto vollständig geladen oder die Wäsche spätestens fertig gewaschen sein soll. Die maximale Bezugsleistung kann dagegen durch das Gerät / den Verbraucher technisch bedingt sein.

Bei einem Ausführungsbeispiel lassen sich auf die gleiche Weise alle aktiven Verbraucher/Einspeiser im Mittel- und Niederspannungsnetz durch Lastprofile unter Angabe der Freiheitsgrade im Lastprofil beschreiben. Die Beschreibung eines Lastprofils kann dabei z. B. durch eine Menge von Zeit-Leistungs-Wertepaaren mit einer ausreichenden Werteauflösung, der Angabe eines funktionalen Zusammenhanges oder in anderer geeigneter Weise erfolgen.

Sollten bei der Bereitstellung und Verwendung von Daten auf einer allgemein verfügbaren Kommunikationsplattform datenschutzrechtliche Einschränkungen bezüglich der hier beispielhaft dargestellten Informationen (z. B. der Orts-/Koordinatenangabe des Verbrauchers) zu berücksichtigen sein, kann stellvertretend eine geeignet verschlüsselte Datenangabe verwendet werden.

Zur Ermittlung der sich ergebenden Lastflüsse im Netz auf Grund der aktiven Verbraucher/Einspeiser können Informationen des Netzbetreibers über die Netztopologie verwendet werden. Ähnlich einer Suchmaschine im Internet kann im Rahmen eines Ausführungsbeispiels über die offene Kommunikationsplattform regelmäßig nach aktiven Verbrauchern/Einspeisern und deren Koordinaten gesucht werden. Als Ergebnis kann der Netzbetreiber auf der Plattform veröffentlichen, welche Verbraucher/Einspeiser bekannt und welche zurzeit aktiv sind. Des Weiteren können Verbraucher/Einspeiser entsprechend der Netztopologie Gruppen zugeordnet werden. Zum Beispiel können alle aktiven Verbraucher/Einspeiser eines Niederspannungsstranges / einer Ortsnetzstation eine Gruppe bilden, für die der Netzbetreiber ein maximales Lastprofil vorgeben kann, dass nicht überschritten werden darf. Ebenso können Maximalleistungen auch zeitlich eingeschränkt (z.B. nur für 2 Stunden in 24 Stunden) angegeben werden. Die statistisch zu erwartende Grundlast auf Grund der nicht-aktiven Verbraucher/Einspeiser kann je Gruppe beispielsweise mindestens für den aktuellen und den nachfolgenden Tag angegeben werden.

Darüber hinaus können vom Netzbetreiber noch Spannungs- und Strommesswerte eingespeist werden, die die Berücksichtigung des aktuellen Netzzustandes in den Gruppen auf der Kommunikationsplattform ermöglichen. Gegebenenfalls können aktuelle Zustandserfassungen mit Heuristiken über an ähnlichen Tagen zu erwartenden Lastflüssen ergänzt werden oder es können Erkenntnisse aus einer Zustandsschätzung (engl. State Estimation) ergänzt werden.

Alternativ zu den vorgenannten Informationen des Netzbetreibers können auch Gruppen aus der Auswertung des rein geometrischen Abstandes der Anschlusspunkt-Koordinaten gebildet werden. So kann z.B. verfahren werden, wenn sich ein Netzbetreiber (noch) nicht aktiv an dem System beteiligen möchte.

Entsprechend einem Ausführungsbeispiel der Erfindung ist jeder aktive Verbraucher/Einspeiser nicht nur Einspeiser von Informationen sondern gleichzeitig auch deren Nutzer. Über die Koordinatenangaben und die Gruppenzuordnung kann dabei jeder aktive Verbraucher/Einspeiser in der Lage sein, Informationen zu den aktuellen und erwarteten Lastverhältnissen in seiner Umgebung (Mitglieder seiner Gruppe) abzurufen und sein eigenes Verhalten daran auszurichten. Diese Ausrichtung kann feststehenden Grundsätzen folgen, die nachstehend beispielhaft beschrieben werden und allgemein oder für bestimmte Regionen/Netzteile mit bestimmten Schwerpunkten definiert werden können. Die Grundsätze können unter anderem über die offene Kommunikationsplattform vom Netzbetreiber bekannt gegeben werden und können dynamisch oder durch einmalige Programmierung in dem aktiven Verbraucher/Einspeiser hinterlegt werden:
- Regenerative Einspeisungen können Vorrang bei der Kapazitätsauslastung haben.
- Nicht-aktive Verbraucher können Vorrang bei der Kapazitätsauslastung haben.
- Wird die maximale Kapazitätsgrenze in einer Gruppe erreicht, können alle Aufladevorgänge von Speichern (z.B. Elektroauto, Wärmespeicher, ...) auf den maximalen Zeitraum des Energiebezuges ausgedehnt werden.
- Wird durch die Summation der von den aktiven Verbrauchern/Einspeisern vorgeschlagenen Lastprofile die maximale Kapazitätsgrenze in einer Gruppe erreicht, kann durch ein geeignetes mathematisches Verfahren der Leistungsbezug aus Zeiten mit maximaler Kapazitätsauslastung in Zeiten mit freier Kapazität verschoben werden (z.B. bei einer Waschmaschine).
- Sollte mit allen diesen Anpassungen die maximale Kapazitätsauslastung nicht einzuhalten sein, kann der maximale Zeitraum des Energiebezuges für alle aktiven Verbraucher um den gleichen Prozentsatz verlängert werden (z.B. in Schritten von 2%), bis eine Einhaltung möglich ist.
- Beim Absinken der Spannung auf z.B. -8% Un an einem Messpunkt in einer Gruppe können für aktive Verbraucher die gleichen Regeln gelten, wie bei Erreichen der maximalen Kapazitätsauslastung.
- Bei plötzlichem Spannungs- und oder Frequenz- und oder Kurzschlussleistungsabfall können alle aktiven Verbraucher auf einen Leistungswert reduziert werden, der einen Inselnetzbetrieb mit den dezentralen Einspeisern in der Gruppe ermöglicht. Der anzusteuernde Leistungswert kann jederzeit - und damit auch bereits vor Fehlereintritt - über die Kommunikationsplattform bekannt sein.
- Bei plötzlichem Anstieg der Kurzschlussleistung / Absinken der Netzimpedanz können alle aktiven Verbraucher ihren Leistungsbezug kontinuierlich innerhalb von z.B. zwei Minuten wieder auf den gewünschten Wert erhöhen.

Das obige Vorgehen kann die folgenden Vorteile mit sich bringen:
- Die Energieverbraucher tauschen auf Basis von Last-/Einspeiseprofilen untereinander in einer Gruppe und mit dem Netzbetreiber nur Möglichkeiten des Leistungsbezuges / der Einspeisung aus und steuern sich dann autark selber.
- Da die aktiven Verbraucher/Einspeiser aus den bereitstehenden Informationen ihr Strombezugs- und Einspeiseverhalten selber optimieren können, ist eine zentrale Entscheidung und Vorgabe nicht erforderlich. Damit entsteht kein Aufwand für ein hierarchisches Steuerungssystem, wie es heute in der Hoch- und Höchstspannung üblich ist.
- Eine Kommunikation in Echtzeit ist nicht erforderlich. Eine schnelle Kommunikation mit geringer zeitlicher Verzögerung, die in der meisten Zeit des Jahres verfügbar ist - analog zum Internet, kann ausreichend sein.
- Bei Nichtverfügbarkeit der Kommunikationsplattform kann es lediglich zu einem Verlust der Optimierung kommen. So können die aktiven Verbraucher/Einspeiser beispielsweise gemäß dem letzten vereinbarten Stand Strom beziehen bzw. einspeisen. Kommt während des Ausfalls der Kommunikationsplattform ein neuer aktiver Verbraucher/Einspeiser hinzu, kann dieser bis zur Wiederverfügbarkeit der Kommunikationsplattform zunächst mit dem vom Verbraucher/Einspeiser vorgeschlagenen Last-/Einspeiseprofil Strom beziehen bzw. einspeisen.
- Bei Kapazitätsengpässen kann die Unterbrechung einzelner Verbraucher oder Verbrauchsgruppen verhindert werden und es kann lediglich zur zeitlichen Streckung des Energiebezuges für alle aktiven Verbraucher kommen.
- Bei Ausfall der Netzanbindung zum Transportnetz kann bis zur Leistungsabsenkung auf Null aller aktiven Verbraucher in einer Gruppe ein Inselnetzbetrieb der nicht-aktiven Verbraucher auf Basis der dezentralen Einspeisungen aufrecht erhalten werden. Auf Grund der Kommunikation über die offene Plattform können die hierzu notwendig einzustellenden Werte schon vor dem Ausfall bekannt sein.
- Jeder Kunde kann entscheiden, welche Verbraucher aktiv und welche nicht-aktiv sind. Für die kritischen nicht-aktiven Verbraucher kann die Zuverlässigkeit erhöht werden. Da die Energiemenge für die aktiven Verbraucher nachgeliefert werden kann, muss es auch hier zu keinen Komforteinbußen des Kunden kommen.
- Die Effizienz der Energieverteilung kann sich erhöhen und die Kosten für den Netzbetreiber sich somit senken lassen.
- Durch den notwendigen Betrieb der Kommunikationsplattform kann ein neues Geschäftsfeld entstehen. Die Überwachung und die Sicherung der Plattform gegenüber z.B.

Hackerangriffen kann mit zu den Betreiberaufgaben gehören. Im Folgenden wird die vorliegende Erfindung anhand von acht, ein beispielhaftes Anwendungsszenario beschreibenden Figuren erläutert.

In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

Dabei zeigen
- Fig. 1: eine schematische Darstellung eines Systems umfassend zwei Ausführungsbeispiele für Verbraucher entsprechend der Erfindung, ein Ausführungsbeispiel eines erfindungsgemäßen Erzeugers und ein Ausführungsbeispiel einer erfindungsgemäßen Kommunikationsplattform;
- Fig. 2: eine schematische Darstellung eines Ausführungsbeispiels eines erfindungsgemäßen Verfahrens im Kontext des Systems aus Fig. 1 anhand eines Flussdiagramms;
- Fig. 3: eine schematische Darstellung eines Gruppenprofils im Kontext des Systems aus Fig. 1;
- Fig. 4: eine schematische Darstellung des Einspeiseprofils des Erzeugers aus Fig. 1;
- Fig. 5: eine schematische Darstellung der maximal zulässigen Leistungsaufnahme der Gruppenmitglieder und Berücksichtigung des Gruppenprofils und des Einspeiseprofils aus Fig. 4 sowie unter Berücksichtigung des Lastprofils eines der Verbraucher aus dem System aus Fig. 1;
- Fig. 6: eine schematische Darstellung des Lastprofils eines der Verbraucher aus Fig. 1;
- Fig. 7: eine schematische Darstellung des Lastprofils eines der Verbraucher aus Fig. 1 vor und nach der Anpassung;
- Fig. 8: eine schematische Überblicksdarstellung eines Ausführungsbeispiels eines erfindungsgemäßen Verfahrens.

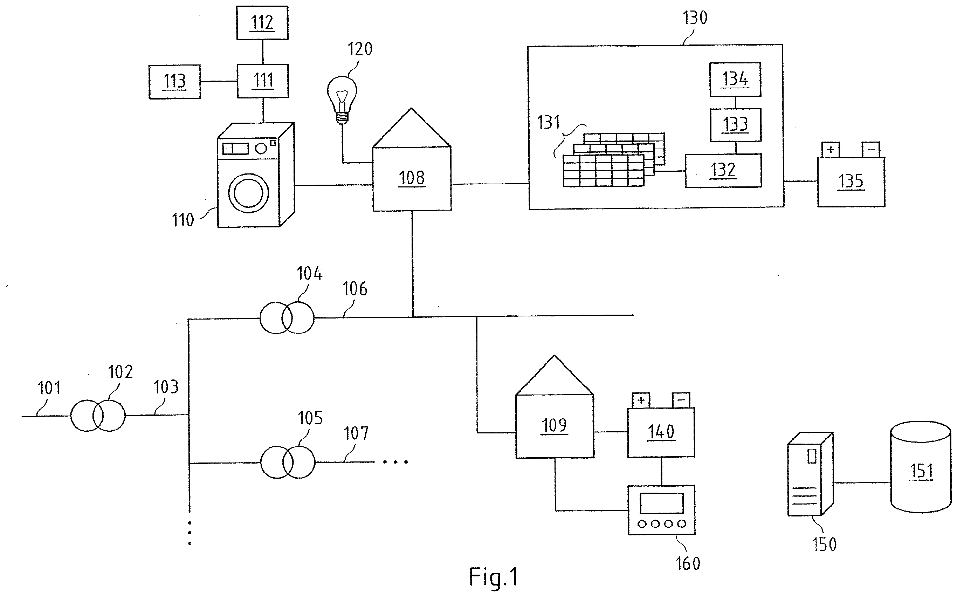

Fig. 1 zeigt eine schematische Darstellung eines Systems umfassend zwei Ausführungsbeispiele für Verbraucher entsprechend der Erfindung, ein Ausführungsbeispiel eines erfindungsgemäßen Erzeugers und ein Ausführungsbeispiel einer erfindungsgemäßen Kommunikationsplattform.

Die Verbraucher sind eine Waschmaschine 110 und eine Fahrzeugbatterie 140 eines Elektrofahrzeugs. Der Erzeuger ist eine Photovoltaikanlage 130. Die Kommunikationsplattform ist ein Server 150, der eine Datenbank 151 verwaltet.

Die Photovoltaikanlage 130 und die Waschmaschine 110 sind einem Wohnhaus 108 zugeordnet, das zudem über ein Beleuchtungssystem 120 verfügt. Die Fahrzeugbatterie 140 ist mit einer Steckdose eines Wohnhauses 109 verbunden. Ihr Ladestrom wird von einer Steuer- und Bedieneinrichtung 160 eines Gebäudeautomationssystems des Wohnhauses 109 gesteuert. Die Wohnhäuser 108 und 109 und damit die ihnen zugeordneten Geräte 110, 120, 130 und 140 sind an einen Niederspannungsstrang 106 eines elektrischen Netzes angeschlossen. Dieser ist über eine Ortsnetzstation 104, die andererseits mit einem Mittelspannungsstrang 103 des elektrischen Netzes verbunden ist, und eine Umspannstation 102, die mit dem Mittelspannungsstrang 103 und einem Hochspannungsstrang 101 verbunden ist, in das elektrische Netz eingebunden. Vom Mittelspannungsstrang 103 geht über eine weitere Ortsnetzstation 105 ein weiterer Niederspannungsstrang 107 ab. Der übrige Aufbau des elektrischen Netzes ist aus Gründen der Übersichtlichkeit nicht dargestellt.

Die Waschmaschine 110 umfasst eine ASIC 111, ein WLAN-Modul 112 und einen Flash-Speicher 113, die der erleichterten Darstellbarkeit halber außerhalb der Waschmaschine 110 gezeigt sind. Die ASIC 111 ist eingerichtet, auf das Lastprofil der Waschmaschine 110 einzuwirken. Das WLAN-Modul 112 ist eingerichtet, ein Lastprofil der Waschmaschine 110 auf der Kommunikationsplattform bereitzustellen, d.h. in der Datenbank 151 des Servers 150 zu hinterlegen. Dazu überträgt es das Lastprofil an einen Gateway (nicht gezeigt), der in der Nähe der Wohnhäuser 108 und 109 angeordnet ist, und eine drahtgebundene Internetverbindung zum Server 150 unterhält. Über diese Verbindung übermittelt der Gateway das Lastprofil an den Server 150. In dem Flash-Speicher 113 ist das Lastprofil für die Waschmaschine 110 hinterlegt.

Die Photovoltaikanlage 130 umfasst Solarmodule 131, einen Wechselrichter 132, der die von den Solarmodulen 131 geliefert Gleichspannung in Wechselspannung umzuwandeln vermag, eine ASIC 133 und ein WLAN-Modul 134. Weiterhin sind der Photovoltaikanlage 130 Energiespeichermittel in Form einer Blei-Gel-Batterie 135 zugeordnet. Die ASIC 133 ist eingerichtet, das Einspeiseprofil der Photovoltaikanlage 130 in den Niederspannungsstrang 106 anzupassen, indem sie für unterschiedliche Zeitpunkte festlegt, welcher Teil der von den Solarmodulen 131 erzeugten elektrischen Leistung über den Wechselrichter 132 in den Niederspannungsstrang 106 eingespeist wird und welcher Teil der Blei-Gel-Batterie 135 zufließt. Über das WLAN-Modul 134 kann das Einspeiseprofil der Photovoltaikanlage 130 analog zu den Erläuterungen bezüglich des WLAN-Moduls 112 in der Datenbank 151 hinterlegt werden.

Das Lastprofil der Fahrzeugbatterie 140 wird von der Steuer- und Bedieneinrichtung 160 festgelegt, die es ebenfalls per Internet in Richtung des Servers 150 überträgt.

Die Waschmaschine 110, die Photovoltaikanlage 130 und die Fahrzeugbatterie 140 sind zu einer Gruppe gruppiert. Für die Gruppe ist ein Gruppenprofil in der Datenbank 151 auf dem Server 150 hinterlegt. Das Gruppenprofil kann beispielsweise für ein Zeitintervall Grenzwerte für den Leistungsfluss aus der Gruppe in das elektrische Netz und/oder für den Leistungsfluss aus dem elektrischen Netz in die Gruppe festlegen. Es kann zum Beispiel durch den Netzbetreiber des elektrischen Netzes vorgegeben werden. Ein Energieversorgungsunternehmen, dessen Kunden über die Verbraucher und Erzeuger der Gruppe verfügen, kann ebenfalls für die Vorgabe des Gruppenprofils verantwortlich sein. Ebenso können Dritte, die weder Netzbetreiber noch Energieversorgungsunternehmen sind, das Gruppenprofil vorgegeben.

Das WLAN-Modul 112 der Waschmaschine 110 ist eingerichtet, das Einspeiseprofil der Photovoltaikanlage 130, das Lastprofil der Fahrzeugbatterie 140 und das Gruppenprofil vom Server 150 abzurufen. Die ASIC 111 der Waschmaschine 110 ist eingerichtet, das Lastprofil der Waschmaschine 110 basierend auf dem abgerufenen Lastprofil der Fahrzeugbatterie 140, dem abgerufenen Einspeiseprofil der Photovoltaikanlage 130 und dem abgerufenen Gruppenprofil anzupassen.

Das WLAN-Modul 134 der Photovoltaikanlage 130 ist eingerichtet, das Lastprofil der Waschmaschine 110, das Lastprofil der Fahrzeugbatterie 140 und das Gruppenprofil vom Server 150 abzurufen. Die ASIC 133 der Photovoltaikanlage 130 ist eingerichtet, das Einspeiseprofil der Photovoltaikanlage 130 basierend auf dem abgerufenen Lastprofil der Waschmaschine 110, dem abgerufenen Lastprofil der Fahrzeugbatterie 140 und dem abgerufenen Gruppenprofil anzupassen.

Die Steuer- und Bedieneinrichtung 160 ist eingerichtet, das Lastprofil der Waschmaschine 110, das Einspeiseprofil der Photovoltaikanlage 130 und das Gruppenprofil vom Server 150 abzurufen. Sie ist ebenfalls eingerichtet, das Lastprofil der Fahrzeugbatterie 140 basierend auf dem abgerufenen Lastprofil der Waschmaschine 110, dem abgerufenen Einspeiseprofil der Photovoltaikanlage 130 und dem abgerufenen Gruppenprofil anzupassen.

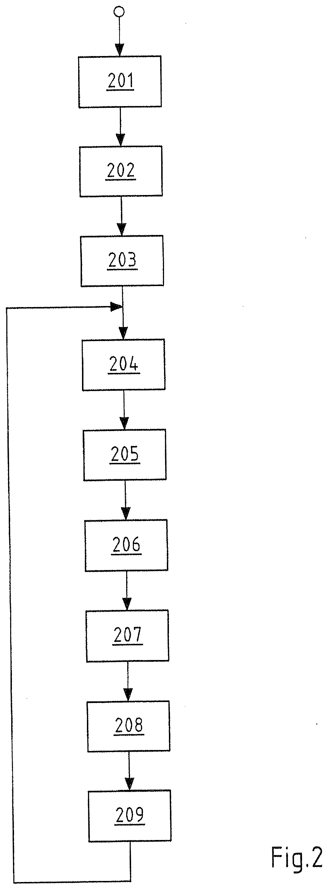

Fig. 2 zeigt eine schematische Darstellung eines Ausführungsbeispiels eines erfindungsgemäßen Verfahrens im Kontext des Systems aus Fig. 1 anhand eines Flussdiagramms.

Zunächst findet im Rahmen von Schritt 201 ein Auswahlprozess auf der Basis von Benutzervorgaben statt. Er entscheidet darüber, ob ein Verbraucher oder Erzeuger einer Gruppe zugeordnet wird. Dem Besitzer der Geräte 110, 120 und 130 steht es dabei zu, den Auswahlprozess bezüglich dieser Geräte durchzuführen. Der Besitzer der Fahrzeugbatterie 140 entscheidet über diese. Im hier erläuterten Ausführungsbeispiel werden die Waschmaschine 110, die Photovoltaikanlage 130 und die Fahrzeugbatterie 140 ausgewählt. Dagegen wird das Beleuchtungssystem 120 nicht ausgewählt. So wird erreicht, dass keine Lastprofilanpassung für das Beleuchtungssystem 120 erfolgen kann. Somit verhält es sich streng so wie vom Benutzer gewünscht, d.h. es erzeugt stets die zum jeweiligen Zeitpunkt gewünschte Helligkeit.

Schritt 202 umfasst, dass das WLAN-Modul 112 der Waschmaschine 110 das Lastprofil der Waschmaschine 110 auf dem Server 150 bereitstellt und dass die Steuer- und Bedieneinrichtung 160 das Lastprofil der Fahrzeugbatterie 140 auf dem Server 150 bereitstellt. Gleichzeitig übertragen das WLAN-Modul 112 und die Steuer- und Bedieneinrichtung 160 Identifikationsdaten, die auf dem Server 150 bereitgestellt werden. Die Identifikationsdaten beinhalten Lokalisationsdaten, aus denen geschlossen werden kann, dass die Waschmaschine 110 und die Fahrzeugbatterie 140 an den Niederspannungsstrang 106 angeschlossen sind. Weiterhin beinhalten die Identifikationsdaten Prioritätskennungen. In Rahmen dieser beispielhaften Ausführungsform wird angenommen, dass für die Waschmaschine 110 eine höhere Priorität vorgegeben ist als für die Fahrzeugbatterie 140.

In Schritt 203 stellt das WLAN-Modul 134 der Photovoltaikanlage 130 das Einspeiseprofil der Photovoltaikanlage 130 auf dem Server 150 bereit. Gleichzeitig überträgt das WLAN-Modul 134 Identifikationsdaten, die auf dem Server 150 bereitgestellt werden. Die Identifikationsdaten beinhalten Lokalisationsdaten, aus denen geschlossen werden kann, dass die Photovoltaikanlage 130 an den Niederspannungsstrang 106 angeschlossen ist. Weiterhin beinhalten die Identifikationsdaten eine Prioritätskennung der Photovoltaikanlage 130.

Die bereitgestellten Identifikationsdaten werden in Schritt 204 samt der Lokalisationsdaten und der Prioritätskennungen abgefragt. Seitens Netzbetreiber des elektrischen Netzes ist vorgegeben, dass das Gruppieren von Verbrauchern und Erzeugern zu einer Gruppe auf Basis der Topologie des elektrischen Netzes erfolgt. Da die Waschmaschine 110, die Photovoltaikanlage 130 und die Fahrzeugbatterie 140 an den Niederspannungsstrang 106 angeschlossen sind, werden sie anhand der Identifikationsdaten in Schritt 205 zu einer Gruppe gruppiert.

In Schritt 206 gibt der Netzbetreiber ein Gruppenprofil vor und stellt es auf dem Server 150 bereit. Anschließend ruft in Schritt 207 das WLAN-Modul 112 der Waschmaschine 110 das Lastprofil der Fahrzeugbatterie 140, das Einspeiseprofil der Photovoltaikanlage 130 und das Gruppenprofil vom Server 150 ab. Dazu überträgt es die Identifikationsdaten der Waschmaschine 110 an den Server 150, der anhand der Identifikationsdaten bestimmt, zu welcher Gruppe, von möglicherweise mehrerer Gruppen, deren Profile von dem Server 150 verwaltet werden, die Waschmaschine 110 gruppiert ist, und die entsprechenden Profile an das WLAN-Modul 112 sendet.

Auf ähnliche Weise fragt die Photovoltaikanlage 130 das Lastprofil der Waschmaschine 110, das Lastprofil der Fahrzeugbatterie 140 und das Gruppenprofil ab. Ebenso werden von der Steuer- und Bedieneinrichtung 160 das Lastprofil der Waschmaschine 110, das Einspeiseprofil der Photovoltaikanlage 130 und das Gruppenprofil abgefragt.

Schritt 208 umfasst, dass die Steuer- und Bedieneinrichtung 160 das Lastprofil der Fahrzeugbatterie 140 basierend auf dem abgerufenen Lastprofil der Waschmaschine 110, dem abgerufenen Einspeiseprofil der Photovoltaikanlage 130 und dem abgerufenen Gruppenprofil anpasst.

Das angepasste Profil wird in Schritt 209 auf dem Server 150 bereitgestellt, wo es das vor der Anpassung bereitgestellte Profil aus der Datenbank 150 verdrängt.

Anschließend wird der vorstehend beschriebene Prozess beginnend mit Schritt 204 erneut durchlaufen. In Schritt 204 werden somit die auf dem Server 150 bereitgestellten Identifikationsdaten wiederholt abgefragt. So kann festgestellt werden, ob ein Verbraucher bzw. Erzeuger neu an den Niederspannungsstrang 106 angeschlossen wurde oder ob ein an den Niederspannungsstrang 106 angeschlossenes, zuvor deaktiviertes Gerät eingeschaltet wurde, wenn das neu angeschlossene oder eingeschaltete Gerät Identifikationsdaten auf dem Server 150 bereitstellt. Wird festgestellt, dass ein Verbraucher bzw. Erzeuger hinzugekommen ist, erfolgt in Schritt 205 ein erneutes Gruppieren anhand der abgefragten Identifikationsdaten, so dass das neu hinzugekommene Gerät in die Gruppe eingegliedert und ihm Rahmen der folgenden Schritte berücksichtigt werden kann. Ebenso kann ein deaktiviertes Gerät, dessen Identifikationsdaten im Zuge der Deaktivierung aus der Datenbank 151 entfernt wurden, aus der Gruppe ausgegliedert werden.

Beim erneuten Durchlaufen der Schritte 207 und 208 wird das angepasste Lastprofil der Fahrzeugbatterie, das zuvor in Schritt 209 auf dem Server 150 bereitgestellt wurde, verwendet. Daher sind die Gruppenmitglieder über den aktuellen Status innerhalb der Gruppe informiert. Es wird erlaubt, dass die Gruppenmitglieder ihre Profile unter Berücksichtung des abgerufenen angepassten Profils erneut anpassen um eine iterative Annährung des elektrischen Verhaltens der Gruppenmitglieder insgesamt an das Gruppenprofil zu erreichen. Auch können eventuell zu einem späteren Zeitpunkt neu zu der Gruppe gruppierte Verbraucher bzw. Erzeuger eine Profilanpassung basierend auf einer aktualisierten Datenlage vornehmen.

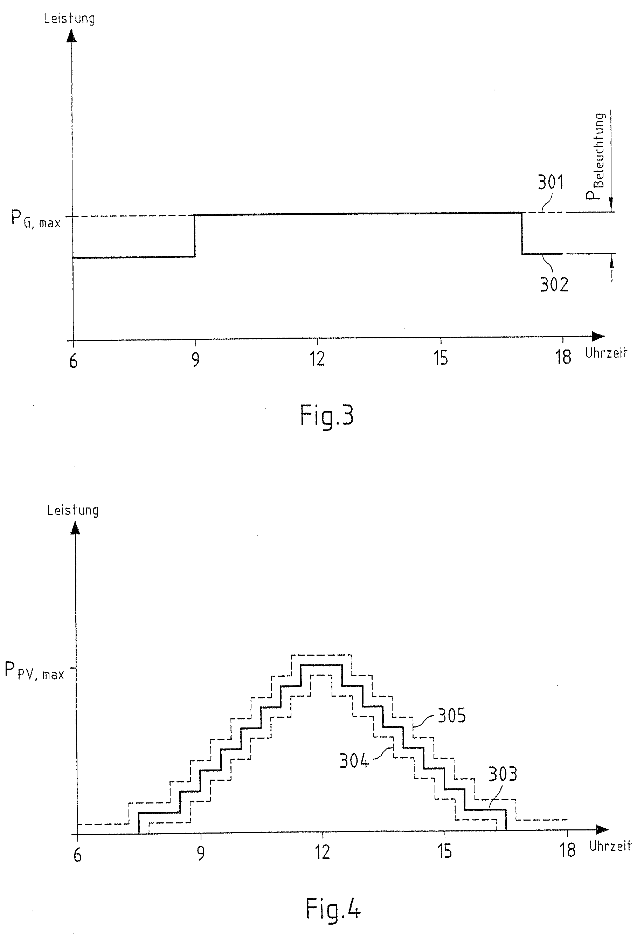

Fig. 3 zeigt eine schematische Darstellung eines Gruppenprofils 302 im Kontext der Systems aus Fig. 1.

In dem Diagramm ist auf der horizontalen Achse die Uhrzeit für einen Zeitraum zwischen 6 und 18 Uhr eingetragen. Auf der vertikalen Achse ist die Leistung aufgetragen, die dem Niederspannungsstrang 106 maximal über den Mittelspannungsstrang 103 zugeführt werden kann. Sie ist für den gesamten Zeitraum zwischen 6 und 18 Uhr auf P_{G,max} festgelegt, wie die mit 301 bezeichnete Linie verdeutlicht. Das Beleuchtungssystem 120 nimmt über den Niederspannungsstrang 106 in der Zeit zwischen 6 und 9 Uhr und in der Zeit zwischen 17 und 18 Uhr die Leistung P_{Beleuchtung} aus dem elektrischen Netz auf. Das Beleuchtungssystem 120 wurde in Schritt 201 des Verfahrens nach Fig. 2 nicht ausgewählt, und ist daher keiner Gruppe zugeordnet. Der vom Beleuchtungssystem 120 verursachte Leistungsfluss ist im Gruppenprofil 302 aber dennoch berücksichtigt, damit über eine Profilanpassung der Gruppenmitglieder sichergestellt werden kann, dass die Leistung P_{G,max} zu keinem Zeitpunkt überschritten wird. Das Gruppenprofil 302 ist daher so vorgegeben, dass es sich aus der Leistung P_{G,max} vermindert um die Leistung P_{Beleuchtung} ergibt, sofern für den jeweiligen Zeitpunkt anzunehmen ist, dass das Beleuchtungssystem 120 eingeschaltet ist. Dazu wird auf statistische Erwartungswerte bezüglich der Benutzung des Beleuchtungssystems 120 zurückgegriffen, die auf Daten über der Benutzung des Beleuchtungssystems 120 am selben Datum des Vorjahres basieren.

Das Gruppenprofil 302 kann basierend auf einer Zustandserfassung des Niederspannungsstrangs 107 angepasst werden. So kann über das Gruppenprofil 302 ermöglicht werden, dass die Verbraucher und Erzeuger der Gruppe ihr Verhalten an die tatsächliche Netzsituation anpassen. Wird zum Beispiel von Verbrauchern, die mit dem Niederspannungsstrang 107 verbunden sind, eine hohe Leistung aus dem Netz benötigt, so dass ohne Herabsetzen der Leistungsaufnahme der an den Niederspannungsstrang 106 angeschlossenen Verbraucher ein Frequenzabfall im elektrischen Netz auftreten würde, kann über die Anpassung des Gruppeprofils 302 auf eine geringere Leistungsaufnahme der Gruppenmitglieder hingewirkt werden.

Fig. 4 zeigt eine schematische Darstellung des Einspeiseprofils 303 des Erzeugers aus Fig. 1, d.h. der Photovoltaikanlage 130.

Das Einspeiseprofil 303 ist dabei in Nährung angegeben. In dem Zeitraum zwischen 11.30 Uhr und 12.30 Uhr wird demgemäß von der Photovoltaikanlage 130 ihre maximale Leistung P_{PV,max} erzeugt. Im Einspeiseprofil sind Zuverlässigkeitsinformationen, die in Fig. 4 in Form der Kurven 304 und 305 visualisiert sind, angegeben. Kurve 304 gibt dabei an, welchen Leistung erwartungsgemäß minimal von der Photovoltaikanlage 130 zu jedem Zeitpunkt erzeugt wird, und Kurve 305 gibt an, welche Leistung maximal zu erwarten ist. Die Zuverlässigkeitsinformationen werden mit dem Einspeiseprofil 303 in Schritt 202 aus Fig. 2 auf dem Server 150 bereitgestellt.

Mittels der Zuverlässigkeitsinformationen kann abgeschätzt werden, wie verlässlich das durch das Gruppenprofil 302 beschriebene Gesamtverhalten der Gruppenmitglieder eintreten wird. Aufbauend darauf kann zwar davon ausgegangen werden, dass das tatsächliche Einspeiseprofil der Photovoltaikanlage 130 das Profil 303 sein wird, der Netzbetreiber kann sich aber darauf einstellen, dass im ungünstigsten Fall lediglich die Leistung gemäß der Kurve 304 eingespeist werden könnte, indem er z.B. eine entsprechende Regelleistung vorhält.

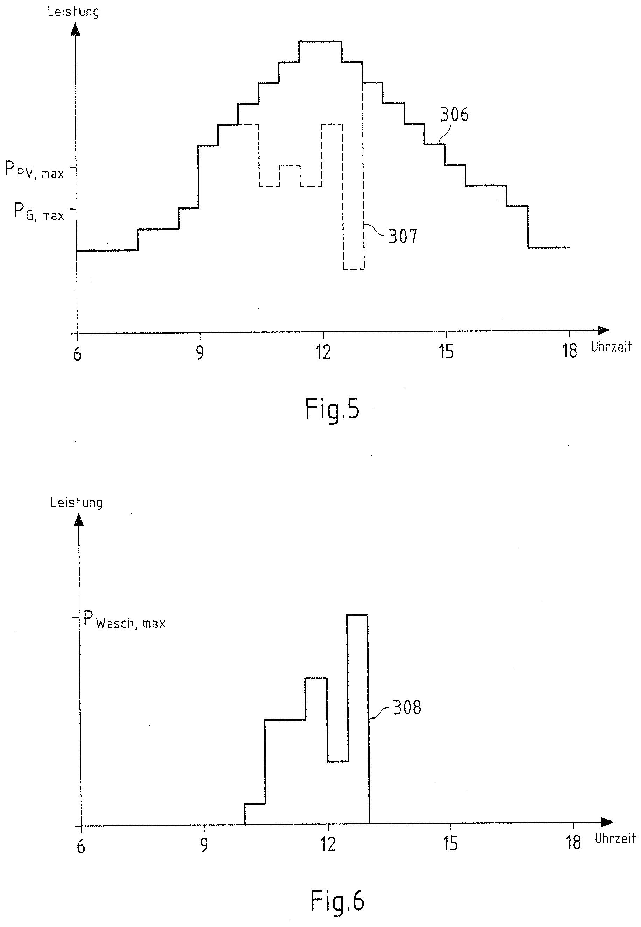

Fig. 5 zeigt eine schematische Darstellung 306 der maximal zulässigen Leistungsaufnahme der Gruppenmitglieder und Berücksichtigung des Gruppenprofils 302 und des Einspeiseprofils 303 aus Fig. 4 sowie unter Berücksichtigung des Lastprofils der Waschmaschine 110.

Die maximal zulässige Leistungsaufnahme über der Zeit ergibt sich aus der Addition der durch das Gruppenprofil 302 vorgegebenen maximalen Leistungsaufnahme und des Einspeiseprofils 303 der Photovoltaikanlage 130. Zur Orientierung sind die Leistungen P_{G,max} und P_{PV,max} in Fig. 5 eingezeichnet.

Fig. 6 zeigt eine schematische Darstellung des Lastprofils 308 der Waschmaschine 110. Das Lastprofil 308 ist im Flash-Speicher 113 der Waschmaschine 110 hinterlegt. Im vorliegenden Beispiel ist die Waschmaschine 110 von einem Benutzer programmiert worden, um 10.00 Uhr mit einem Waschvorgang zu beginnen, der drei Stunden dauert. Während des Waschvorgangs verändert sich der Leistungsbedarf der Waschmaschine 110. Er ist mit der Leistungsaufnahme P_{Wasch,max} während des Schleuderns der Wäsche am Ende des Waschvorgangs am höchsten. Die Kurve 307 in Fig. 5 zeigt an, welche Leistung nach Abzug der von der Waschmaschine 110 dem Niederspannungsstrang 106 entnommenen Leistung noch innerhalb der Gruppe zur Verfügung steht, ohne die Vorgabe des Gruppenprofils 302 bezüglich der maximal durch die Gruppenmitglieder dem elektrischen Netz über den Niederspannungsstrang 106 zu entnehmenden Leistung zu verletzen.

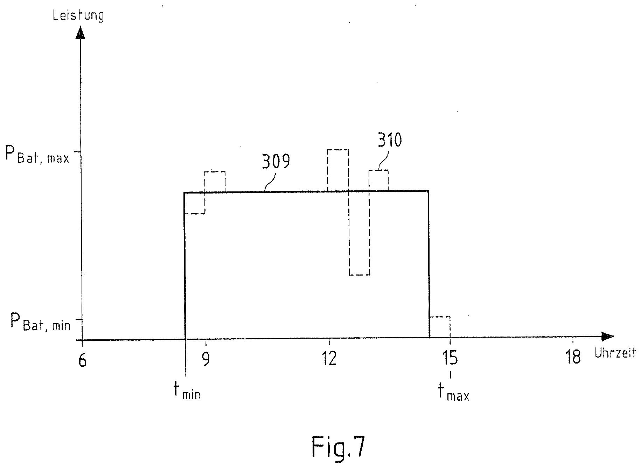

Fig. 7 zeigt eine schematische Darstellung des Lastprofils der Fahrzeugbatterie 140 vor und nach der Anpassung.

Aus technischen Gründen darf die Fahrzeugbatterie 140 beim Laden höchstens die Leistung P_{Bat,max} aufnehmen. Damit der Ladungsvorgang ordnungsgemäß ablaufen kann, muss der Batterie 140 während eines Ladevorgangs stets zumindest die Leistung P_{Bat,min} zugeführt werden. Da der Besitzer des Fahrzeugs, zu dem die Fahrzeugbatterie 140 gehört, um 15.00 Uhr (tₘₐₓ) eine längere Fahrt plant, soll die Batterie 140 spätestens zu diesem Zeitpunkt zumindest zu 90% ihrer Kapazität geladen sein.

Durch die Leistungsgrenzen P_{Bat,max} und P_{Bat,min}, den Ladezustand der Fahrzeugbatterie 140 zu Begin des Ladevorgangs und der Notwendigkeit, die Batterie 140 bis 15.00 Uhr zumindest zu 90% zu laden, sind Freiheitsgrade angegeben, innerhalb derer das Lastprofil der Fahrzeugbatterie 140 anpassbar ist. Mit dem Zeitraum zwischen dem Anschluss der Fahrzeugbatterie 140 an die Steckdose des Wohnhauses 109 und damit an den Niederspannungsstrang 106 (tₘᵢₙ= 8.30 Uhr) und tₘₐₓ ist ein Maximalzeitraum festgelegt, in dem die Fahrzeugbatterie 140 dem elektrischen Netz eine festgelegte Energie zu entnehmen hat.

Zunächst wird für das Laden der Fahrzeugbatterie 140 von der Bedieneinrichtung 160 das Last- bzw. Ladeprofil 309 vorgeschlagen. Demnach soll dem elektrischen Netz zwischen tₘᵢₙ und tₘₐₓ eine gleichbleibende Leistung entnommen werden. Das Profil 309 wird in Schritt 202 aus Fig. 2 auf dem Server 150 bereitgestellt. Gleiches geschieht mit P_{Bat,max} und P_{Bat,min}, der Information, wie viel Energie die Fahrzeugbatterie 140 zumindest aufnehmen muss, und der Zeit tₘₐₓ, bis zu der die Energieaufnahme spätestens erfolgt sein muss. Zudem wird eine Zeit übertragen, die die Batterie 140 mindestens Energie aus dem elektrischen Netz beziehen soll, und die Energie, die der Batterie maximal zugeführt werden kann, bis sie vollständig geladen ist.

Die Ausnutzung der angegebenen Freiheitsgrade erlaubt das individualisierte Anpassen des Lastprofils der Fahrzeugbatterie 140. Durch das Bereitstellen der Freiheitsgrade auf dem Server 150 wird nach dem Abrufen dieser Daten durch die andern Gruppenmitglieder in Schritt 207 aus Fig. 2 für diese kalkulierbar, in welchem Rahmen das Lastprofil der Fahrzeugbatterie 140 anpassbar ist.

Da für die Waschmaschine 110 eine höhere Priorität als für die Fahrzeugbatterie 140 vorgegeben ist, passt die Waschmaschine 110 ihr Lastprofil 308 zunächst nicht an.

In der Zeit zwischen 8.30 Uhr und 9.00 Uhr reicht die verfügbare Leistung nicht, um das Lastprofil 309 der Fahrzeugbatterie 140 zu verwirklichen, wie sich aus der Kurve 307 in Fig. 5 ergibt. Daher wird das Lastprofil der Fahrzeugbatterie 140 nach Regeln, die in der Steuer- und Bedieneinrichtung 160 festgelegt sind, definiert, wie in Abhängigkeit von dem abgerufenen Lastprofil 308, dem abgerufenen Einspeiseprofil 303 und dem abgerufenen Gruppenprofil 302, die Anpassung des Lastprofils 309 zu erfolgen hat, angepasst, so dass die Fahrzeugbatterie 140 weniger Leistung aus dem Netz aufnimmt, wie das angepasste Lastprofil 310 zeigt. In der Zeit zwischen 9.00 Uhr und 9.30 Uhr wird dagegen die Leistungsaufnahme gegenüber dem Lastprofil 309 erhöht um die geringe Leistungsaufnahme zuvor zu kompensieren. So wird auch in den Zeiträumen zwischen 12.00 Uhr und 12.30 Uhr und zwischen 13.00 Uhr und 13.30 Uhr verfahren. Der Leistungsbezug wird bis 15.00 Uhr ausgedehnt. Das angepasste Lastprofil ist dabei so ausgelegt, dass um 15.00 die notwendige Energie dem Netz entnommen worden ist. Dies ist auch daran zu erkennen, dass die Fläche unter dem angepassten Lastprofil 310 der Fläche unter dem Lastprofil 309 entspricht. Entsprechend des angepassten Lastprofils 310 wird zu keiner Zeit die Leistung P_{Bat,min} unterschritten und zu keiner Zeit die Leistung P_{Bat,max} überschritten. Die Steuer- und Bedieneinrichtung 160 hat das Verhalten der Batterie autonom an dem Verhalten der Waschmaschine 110 und der Photovoltaikanlage 130 unter Berücksichtigung des Gruppenprofils 302 ausgerichtet. Mit der Anpassung des Lastprofils der Fahrzeugbatterie 140 überschreitet die Gruppe zwischen 6.00 Uhr und 18.00 Uhr die im Gruppenprofil 302 vorgegebene maximale Leistungsaufnahme aus dem elektrischen Netz nicht. Eine Anpassung des Lastprofils 308 der Waschmaschine 110 erfolgt daher in einem nachfolgenden Schritt nicht.

Das Verhalten der Gruppe auf der Ebene des Gesamtnetzes bleibt nicht mehr ausschließlich dem Zufall überlassen, sondern richtet sich an dem Gruppenprofil 302 aus. Es kann also einheitlich für die Waschmaschine 110, die Fahrzeugbatterie 140 und die Photovoltaikanlage 130 über das Gruppenprofil 302 ein Richtverhalten für die Gruppenmitglieder insgesamt vorgegeben werden, das diese dann über die Anpassung ihrer Profile umsetzen. Das Verhalten der Gruppenmitglieder kann dann als selbstorganisiertes Leistungsflussmanagement verstanden werden. Die somit gewonnene Vorhersehbarkeit des von der Gruppe verursachten Leistungsflusses erlaubt eine geringere Regelleistung vorzuhalten. Durch die Vorgabe des Gruppenprofils 302 lässt sich der durch die Gruppenmitglieder hervorgerufene maximale Leistungsfluss reduzieren, so dass auch die Anforderungen an die Netzinfrastruktur herabgesetzt werden. Weiterhin kann eine optimale Kapazitätsauslastung erreicht sowie Frequenz- und Spannungshaltung bewirkt werden.

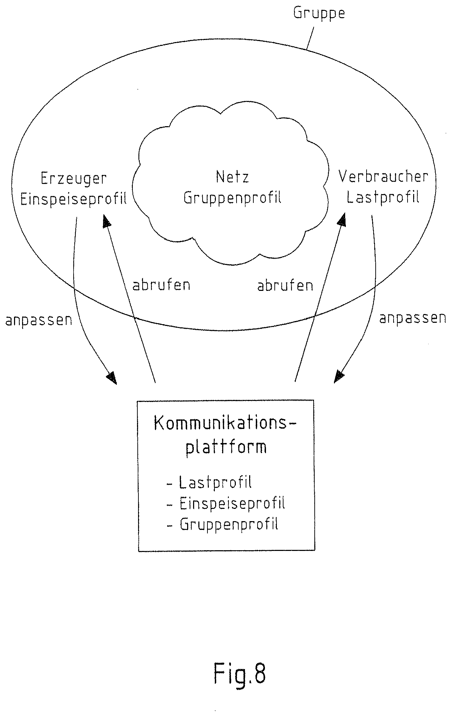

Fig. 8 zeigt eine schematische Überblicksdarstellung eines erfindungsgemäßen Verfahrens.

In Fig. 8 sind ein Verbraucher und Erzeuger zu einer Gruppe gruppiert. Verbraucher und Erzeuger sind mit einem elektrischen Netz verbunden. Dem Verbraucher ist ein Lastprofil zugeordnet und dem Erzeuger ist ein Einspeiseprofil zugeordnet. Der Gruppe ist ein Gruppenprofil zugeordnet. Lastprofil, Einspeiseprofil und Gruppenprofil sind auf einer Kommunikationsplattform bereitgestellt.

Der Verbraucher ruft das Einspeiseprofil und das Gruppenprofil von der Kommunikationsplattform ab. Der Erzeuger ruft das Lastprofil und das Gruppenprofil von der Kommunikationsplattform ab. Basierend auf den abgerufenen Profilen passt der Verbraucher sein Lastprofil an und der Erzeuger passt sein Einspeiseprofil an. Die angepassten Profile werden auf der Kommunikationsplattform bereitgestellt.

## Patentansprüche

1. Verfahren umfassend:
- Gruppieren (205) von zumindest einem Erzeuger (130) und zumindest einem Verbraucher (110,140), die mit einem elektrischen Netz (101-107) verbunden sind, zu einer Gruppe (110, 130, 140); wobei die Gruppe (110, 130, 140) zumindest zwei Gruppenmitglieder (110, 130, 140) umfasst; **dadurch gekennzeichnet, dass** das Verfahren umfasst:
- Bereitstellen (202) von Lastprofilen (308, 309) durch die Verbraucher (110, 140) der Gruppe (110, 130, 140) auf einer Kommunikationsplattform (150);
- Bereitstellen (203) von Einspeiseprofilen (303) durch die Erzeuger (130) der Gruppe (110, 130, 140) auf der Kommunikationsplattform (150);
- Bereitstellen (206) eines vorgegebenen Gruppenprofils (302) auf der Kommunikationsplattform (150);
- verbraucherseitiges Abrufen (207) der Lastprofile (308, 309), der Einspeiseprofile (303) und des Gruppenprofils (302) und verbraucherseitiges Anpassen (208) des Lastprofils (308, 309) des jeweiligen Verbrauchers (110, 140) der Gruppe (110, 130,140) basierend auf den abgerufenen Lastprofilen (308, 309), den abgerufenen Einspeiseprofilen (303) und dem abgerufenen Gruppenprofil (302) und erzeugerseitiges Abrufen (207) der Lastprofile (308, 309), der Einspeiseprofile (303) und des Gruppenprofils (302) und erzeugerseitiges Anpassen (208) des Einspeiseprofils (303) des jeweiligen Erzeugers (130) der Gruppe (110, 130, 140) basierend auf den abgerufenen Lastprofilen (308, 309), den abgerufenen Einspeiseprofilen (303) und dem abgerufenen Gruppenprofil (302), und
- wobei zumindest seitens eines Teils der Verbraucher (110, 140) und Erzeuger (130) der Gruppe (110,130,140) Regeln festgelegt sind, die vorgeben, wie in Abhängigkeit von den abgerufenen Lastprofilen (308, 309), den abgerufenen Einspeiseprofilen (303) und dem abgerufenen Gruppenprofil (302) die Anpassung des jeweiligen Lastprofils (308, 309) bzw. Erzeugerprofils (303) zu erfolgen hat,
- wobei für zumindest einen Verbraucher (140) der Gruppe (110, 130, 140) Freiheitsgrade (P_{Bat,max}, P_{Bat,min}, tₙₘₐₓ, tₘᵢₙ) angegeben sind, innerhalb derer das Lastprofil (309) des Verbrauchers anpassbar ist, und für zumindest einen Erzeuger (130) der Gruppe (110, 130,140) Freiheitsgrade angegeben sind, innerhalb derer das Einspeiseprofil (303) des Erzeugers (130) anpassbar ist, und
- wobei zumindest für einen Teil der Verbraucher (110, 140) und Erzeuger (130) der Gruppe (110, 130, 140) Prioritäten vorgegeben sind, wobei zunächst die Verbraucher und Erzeuger (130) mit der niedrigsten Priorität ihre Last-bzw. Einspeiseprofile anpassen,
- wobei einem Verbraucher der Gruppe Speichermittel zugeordnet sind, in denen zumindest zwei Lastprofile für den Verbraucher hinterlegt sind,
- wobei das Anpassen des Lastprofils des Verbrauchers die Auswahl eines der hinterlegten Lastprofile umfasst, und
- wobei einem Erzeuger der Gruppe Speichermittel zugeordnet sind, in denen zumindest zwei Einspeiseprofile für den Erzeuger hinterlegt sind, und
- wobei das Anpassen des Einspeiseprofils des Erzeugers die Auswahl eines der hinterlegten Einspeiseprofile umfasst.

2. Verfahren nach Anspruch 1, **dadurch gekennzeichnet, dass** zumindest ein Lastprofil und/oder zumindest ein Einspeiseprofil durch Zeit-Leistungs-Wertepaare beschrieben wird.

3. Verfahren nach Anspruch 1 oder 2, **dadurch gekennzeichnet, dass** zumindest ein Lastprofil auf einer Lastprognose basiert und/oder zumindest ein Einspeiseprofil auf einer Einspeiseprognose basiert.

4. Verfahren nach einem der Ansprüche 1-3, **dadurch gekennzeichnet, dass** zumindest ein Lastprofil durch zu erwartende Maximal- und/oder Minimalwerte der Leistungsaufnahme beschrieben wird und/oder zumindest ein Einspeiseprofil durch zu erwartende Maximal- und/oder Minimalwerte der Leistungsabgabe beschrieben wird.

5. Verfahren nach einem der Ansprüche 1-4, **dadurch gekennzeichnet, dass** die Verbraucher (110, 140) ihre angepassten Lastprofile (310) und/oder die Erzeuger (130) ihre angepassten Einspeiseprofile auf der Kommunikationsplattform (150) bereitstellen (209).

6. Verfahren nach einem der Ansprüche 1-5, **dadurch gekennzeichnet, dass** das Gruppieren (205) von Verbrauchern (110, 140) und/oder Erzeugern (130) zu einer Gruppe (110, 130, 140) auf Basis der Topologie des elektrischen Netzes (101-107) erfolgt.

7. Verfahren nach einem der Ansprüche 1-6, **dadurch gekennzeichnet, dass** Verbraucher (110, 140) und Erzeuger (130) Identifikationsdaten, insbesondere Lokalisationsdaten auf der Kommunikationsplattform (150) bereitstellen (202, 203), anhand derer das Gruppieren (205) der Verbraucher (110, 140) und Erzeuger (130) zu einer Gruppe (110, 130, 140) erfolgt.

8. Verfahren nach Anspruch 7, **dadurch gekennzeichnet, dass** die auf der Kommunikationsplattform (150) bereitgestellten Identifikationsdaten wiederholt abgefragt werden (204) und bei Bedarf ein erneutes Gruppieren (205) der zugehörigen Verbraucher (110, 140) und Erzeuger (140) anhand der abgefragten Identifikationsdaten erfolgt.

9. Verfahren nach einem der Ansprüche 1-8, **dadurch gekennzeichnet, dass** ein, insbesondere auf der Basis von Benutzervorgaben durchgeführter Auswahlprozess (201) stattfindet, der darüber entscheidet, ob ein Verbraucher (110, 120, 140) oder Erzeuger (130) einer Gruppe (110, 130, 140) zugeordnet wird.

10. Verfahren nach einem der Ansprüche 1-9, **dadurch gekennzeichnet, dass** die Freiheitsgrade für einen Verbraucher (140) durch die durch den Verbraucher (140) dem elektrischen Netz (101-107) innerhalb eines festgelegten Maximalzeitraums (tₘₐₓ-tₘᵢₙ) zu entnehmende Energie festgelegt sind.

11. Verfahren nach einem der Ansprüche 1-10, **dadurch gekennzeichnet, dass** für zumindest einen Verbraucher der Gruppe (110, 130, 140) Zuverlässigkeitsinformationen im Lastprofil (308, 309) angegeben sind und/oder für zumindest einen Erzeuger (130) der Gruppe (110, 130,140) Zuverlässigkeitsinformationen (304, 305) im Einspeiseprofil (303) angegeben sind.

12. Verfahren nach einem der Ansprüche 1-11, **dadurch gekennzeichnet, dass** regenerativen Erzeugern (130) eine höhere Priorität zugewiesen wird als nicht regenerativen Erzeugern.

13. Verfahren nach einem der Ansprüche 1-12, **dadurch gekennzeichnet, dass** im Gruppenprofil (302) der von Verbrauchern (120) und/oder Erzeugern, die keiner Gruppe (110, 130, 140) zugeordnet sind, verursachte Leistungsfluss berücksichtigt ist.

14. Verfahren nach einem der Ansprüche 1-13, **dadurch gekennzeichnet, dass** das Gruppenprofil (302) basierend auf einer Zustandserfassung zumindest eines Teils des elektrischen Netzes (101-107) angepasst wird.

15. Steuermittel (111, 160) für einen Verbraucher (110, 140), der mit einem elektrischen Netz (101-107) verbindbar ist und zu einer zumindest zwei Gruppenmitglieder (110, 130, 140) umfassenden Gruppe (110, 130, 140) gruppierbar ist, **dadurch gekennzeichnet, dass**
- die Steuermittel (111, 160) eingerichtet sind, dem Verbraucher (110, 140) zugeordnete Kommunikationsmittel (112, 160) zu veranlassen, ein Lastprofil (308, 309) des Verbrauchers auf einer Kommunikationsplattform (150) bereitzustellen, auf der weiterhin Einspeiseprofile (303) zu der Gruppe (110, 130, 140) gruppierter Erzeuger (130), die mit dem elektrischen Netz (101-107) verbunden sind, bereitstellbar sind, Lastprofile (308, 309) möglicher weiterer Verbraucher (110, 140) der Gruppe (110, 130, 140) bereitstellbar sind und ein vorgegebenes Gruppenprofil (302) bereitstellbar ist;
- die Steuermittel (111, 160) eingerichtet sind, die Kommunikationsmittel (112, 160) zu veranlassen, die Lastprofile (308, 309), die Einspeiseprofile (303) und das Gruppenprofil (302) von der Kommunikationsplattform (150) abzurufen;
- die Steuermittel (111, 160) eingerichtet sind, das Lastprofil (308, 309) des Verbrauchers (110, 140) basierend auf den abgerufenen Lastprofilen (308, 309), den abgerufenen Einspeiseprofilen (303) und dem abgerufenen Gruppenprofil (302) anzupassen,
- wobei seitens des Verbrauchers (110, 140) Regeln festgelegt sind, die vorgeben, wie in Abhängigkeit von den abgerufenen Lastprofilen (308, 309), den abgerufenen Einspeiseprofilen (303) und dem abgerufenen Gruppenprofil (302) die Anpassung des jeweiligen Lastprofils (308, 309) zu erfolgen hat,
- wobei für zumindest einen Verbraucher (140) der Gruppe (110, 130, 140) Freiheitsgrade (P_{Bat,max}, P_{Bat,min}, tₙₘₐₓ, tₘᵢₙ) angegeben sind, innerhalb derer das Lastprofil (309) des Verbrauchers anpassbar ist, und
- wobei zumindest für einen Teil der Verbraucher (110, 140) der Gruppe (110, 130, 140) Prioritäten vorgegeben sind, wobei zunächst die Verbraucher mit der niedrigsten Priorität ihre Last- bzw. Einspeiseprofile anpassen,
- wobei dem Verbraucher Speichermittel zugeordnet sind, in denen zumindest zwei Lastprofile für den Verbraucher hinterlegt sind,
- wobei das Anpassen des Lastprofils des Verbrauchers die Auswahl eines der hinterlegten Lastprofile umfasst.

16. Steuermittel (133) für einen Erzeuger (130), der mit einem elektrischen Netz (101-107) verbindbar ist und zu einer zumindest zwei Gruppenmitglieder umfassenden Gruppe (110, 130, 140) gruppierbar ist, **dadurch gekennzeichnet, dass**
- die Steuermittel (133) eingerichtet sind, dem Erzeuger (130) zugeordnete Kommunikationsmittel (134) zu veranlassen, ein Einspeiseprofil (303) des Erzeugers (130) auf einer Kommunikationsplattform (150) bereitzustellen, auf der weiterhin Lastprofile (308, 309) zu der Gruppe (110, 130, 140) gruppierter Verbraucher (110, 140), die mit dem elektrischen Netz (101-107) verbunden sind, bereitstellbar sind, Einspeiseprofile möglicher weiterer Erzeuger der Gruppe (110, 130, 140) bereitstellbar sind und ein vorgegebenes Gruppenprofil (302) bereitstellbar ist;
- die Steuermittel (133) eingerichtet sind, die Kommunikationsmittel (134) zu veranlassen, die Lastprofile (308, 309), die Einspeiseprofile (303) und das Gruppenprofil (302) von der Kommunikationsplattform (150) abzurufen;
- die Steuermittel (133) eingerichtet sind, das Einspeiseprofil (303) des Erzeugers (130) basierend auf den abgerufenen Lastprofilen (308, 309), den abgerufenen Einspeiseprofilen (303) und dem abgerufenen Gruppenprofil (302) anzupassen,
- wobei seitens des Erzeugers (130) Regeln festgelegt sind, die vorgeben, wie in Abhängigkeit von den abgerufenen Lastprofilen (308, 309), den abgerufenen Einspeiseprofilen (303) und dem abgerufenen Gruppenprofil (302) die Anpassung des jeweiligen Erzeugerprofils (303) zu erfolgen hat,
- wobei für zumindest einen Erzeuger (130) der Gruppe (110, 130,140) Freiheitsgrade angegeben sind, innerhalb derer das Einspeiseprofil (303) des Erzeugers (130) anpassbar ist, und
- wobei zumindest für einen Teil der Erzeuger (130) der Gruppe (110, 130, 140) Prioritäten vorgegeben sind, wobei zunächst die Erzeuger (130) mit der niedrigsten Priorität ihre Last- bzw. Einspeiseprofile anpassen,
- wobei dem Erzeuger Speichermittel zugeordnet sind, in denen zumindest zwei Einspeiseprofile für den Erzeuger hinterlegt sind,
- wobei das Anpassen des Einspeiseprofils des Erzeugers die Auswahl eines der hinterlegten Einspeiseprofile umfasst.

17. Verbraucher (110, 140), **dadurch gekennzeichnet, dass**
- der Verbraucher (110, 140), mit einem elektrischen Netz (101-107) verbindbar ist und zu einer zumindest zwei Gruppenmitglieder (110, 130, 140) umfassenden Gruppe (110, 130, 140) gruppierbar ist;
- dem Verbraucher (110, 140) Kommunikationsmittel (112, 134) zugeordnet sind, die eingerichtet sind, ein Lastprofil (308, 309) des Verbrauchers (110, 140) auf einer Kommunikationsplattform (150) bereitzustellen, auf der weiterhin Einspeiseprofile (303) zu der Gruppe (110, 130, 140) gruppierter Erzeuger (130), die mit dem elektrischen Netz (101-107) verbunden sind, bereitstellbar sind, Lastprofile (308, 309) möglicher weiterer Verbraucher (110, 140) der Gruppe (110, 130, 140) bereitstellbar sind und ein vorgegebenes Gruppenprofil (302) bereitstellbar ist, und die eingerichtet sind, die Lastprofile (308, 309), die Einspeiseprofile (303) und das Gruppenprofil (302) von der Kommunikationsplattform (150) abzurufen;
- dem Verbraucher (110, 140) Steuermittel (111, 133) gemäss Anspruch 15 zugeordnet sind, die eingerichtet sind, das Lastprofil (308, 309) des Verbrauchers (110, 140) basierend auf den abgerufenen Lastprofilen (308, 309), den abgerufenen Einspeiseprofilen (303) und dem abgerufenen Gruppenprofil (302) anzupassen,
- wobei seitens des Verbrauchers (110, 140) Regeln festgelegt sind, die vorgeben, wie in Abhängigkeit von den abgerufenen Lastprofilen (308, 309), den abgerufenen Einspeiseprofilen (303) und dem abgerufenen Gruppenprofil (302) die Anpassung des jeweiligen Lastprofils (308, 309) zu erfolgen hat,
- wobei für zumindest einen Verbraucher (140) der Gruppe (110, 130, 140) Freiheitsgrade (P_{Bat,max}, P_{Bat,min}, tₙₘₐₓ, tₘᵢₙ) angegeben sind, innerhalb derer das Lastprofil (309) des Verbrauchers anpassbar ist, und
- wobei zumindest für einen Teil der Verbraucher (110, 140) der Gruppe (110, 130, 140) Prioritäten vorgegeben sind, wobei zunächst die Verbraucher mit der niedrigsten Priorität ihre Last- bzw. Einspeiseprofile anpassen,
- wobei dem Verbraucher Speichermittel zugeordnet sind, in denen zumindest zwei Lastprofile für den Verbraucher hinterlegt sind,
- wobei das Anpassen des Lastprofils des Verbrauchers die Auswahl eines der hinterlegten Lastprofile umfasst.

18. Erzeuger (130), **dadurch gekennzeichnet, dass**
- der Erzeuger (130) mit einem elektrischen Netz (101-107) verbindbar ist und zu einer zumindest zwei Gruppenmitglieder (110, 130, 140) umfassenden Gruppe (110, 130, 140) gruppierbar ist;
- dem Erzeuger (130) Kommunikationsmittel (160) zugeordnet sind, die eingerichtet sind, ein Einspeiseprofil (303) des Erzeugers auf einer Kommunikationsplattform (150) bereitzustellen, auf der weiterhin Lastprofile (308, 309) zu der Gruppe (110, 130, 140) gruppierter Verbraucher (110, 140), die mit dem elektrischen Netz (101-107) verbunden sind, bereitstellbar sind, Einspeiseprofile möglicher weiterer Erzeuger der Gruppe bereitstellbar sind und ein vorgegebenes Gruppenprofil (302) bereitstellbar ist, und die eingerichtet sind, die Lastprofile (308, 309), die Einspeiseprofile (303) und das Gruppenprofil (302) von der Kommunikationsplattform (150) abzurufen;
- dem Erzeuger (130)Steuermittel (160) gemäss Anspruch 16 zugeordnet sind, die eingerichtet sind, das Einspeiseprofil (303) des Erzeugers (130) basierend auf den abgerufenen Lastprofilen (308, 309), den abgerufenen Einspeiseprofilen (303) und dem abgerufenen Gruppenprofil (302) anzupassen,
- wobei seitens des Erzeugers (130) Regeln festgelegt sind, die vorgeben, wie in Abhängigkeit von den abgerufenen Lastprofilen (308, 309), den abgerufenen Einspeiseprofilen (303) und dem abgerufenen Gruppenprofil (302) die Anpassung des jeweiligen Erzeugerprofils (303) zu erfolgen hat,
- wobei für zumindest einen Erzeuger (130) der Gruppe (110, 130, 140) Freiheitsgrade angegeben sind, innerhalb derer das Einspeiseprofil (303) des Erzeugers (130) anpassbar ist, und
- wobei zumindest für einen Teil der Erzeuger (130) der Gruppe (110, 130, 140) Prioritäten vorgegeben sind, wobei zunächst die Erzeuger (130) mit der niedrigsten Priorität ihre Last- bzw. Einspeiseprofile anpassen,
- wobei dem Erzeuger der Gruppe Speichermittel zugeordnet sind, in denen zumindest zwei Einspeiseprofile für den Erzeuger hinterlegt sind,
- wobei das Anpassen des Einspeiseprofils des Erzeugers die Auswahl eines der hinterlegten Einspeiseprofile umfasst.

19. Kommunikationsplattform (150), **dadurch gekennzeichnet, dass**
- auf der Kommunikationsplattform (150) Lastprofile (308, 309) von Verbrauchern (110, 140) und Einspeiseprofile (303) von Erzeugern (130) bereitstellbar sind, wobei die Verbraucher (110, 140) und die Erzeuger (130) mit einem elektrischen Netz (101-107) verbunden sind und zu einer Gruppe (110, 130, 140) gruppiert sind, wobei die Gruppe (110, 130, 140) zumindest zwei Gruppenmitglieder (110, 130, 140) umfasst, und auf der ein vorgegebenes Gruppenprofil (302) bereitstellbar ist;
- von der Kommunikationsplattform (150) die Lastprofile (308, 309), die Einspeiseprofile (303) und das Gruppenprofil (302) verbraucherseitig zum verbraucherseitigen Anpassen des Lastprofils (308, 309) des jeweiligen Verbrauchers (110, 140) der Gruppe (110, 130, 140) basierend auf den abgerufenen Lastprofilen (308, 309), den abgerufenen Einspeiseprofilen (303) und dem abgerufenen Gruppenprofil (302) abrufbar sind und von der Kommunikationsplattform (150) die Lastprofile (308, 309), die Einspeiseprofile (303) und das Gruppenprofil (302) erzeugerseitig zum erzeugerseitigen Anpassen des Einspeiseprofils (303) des jeweiligen Erzeugers (130) der Gruppe (110, 130,140) basierend auf den abgerufenen Lastprofilen (308, 309), den abgerufenen Einspeiseprofilen (303) und dem abgerufenen Gruppenprofil (302) abrufbar sind,
- wobei zumindest seitens eines Teils der Verbraucher (110, 140) und Erzeuger (130) der Gruppe (110, 130, 140) Regeln festlegbar sind, die vorgeben, wie in Abhängigkeit von den abgerufenen Lastprofilen (308, 309), den abgerufenen Einspeiseprofilen (303) und dem abgerufenen Gruppenprofil (302) die Anpassung des jeweiligen Lastprofils (308, 309) bzw. Erzeugerprofils (303) zu erfolgen hat,
- wobei für zumindest einen Verbraucher (140) der Gruppe (110, 130, 140) Freiheitsgrade (PBat,max, PBat,min, tnmax, tmin) angegeben sind, innerhalb derer das Lastprofil (309) des Verbrauchers anpassbar ist, und für zumindest einen Erzeuger (130) der Gruppe (110, 130, 140) Freiheitsgrade angegeben sind, innerhalb derer das Einspeiseprofil (303) des Erzeugers (130) anpassbar ist, und
- wobei zumindest für einen Teil der Verbraucher (110, 140) und Erzeuger (130) der Gruppe (110,130, 140) Prioritäten vorgegeben sind, wobei zunächst die Verbraucher und/oder Erzeuger (130) mit der niedrigsten Priorität ihre Last- bzw. Einspeiseprofile anpassen,
- wobei einem Verbraucher der Gruppe Speichermittel zugeordnet sind, in denen zumindest zwei Lastprofile für den Verbraucher hinterlegt sind,
- wobei das Anpassen des Lastprofils des Verbrauchers die Auswahl eines der hinterlegten Lastprofile umfasst, und
- wobei einem Erzeuger der Gruppe Speichermittel zugeordnet sind, in denen zumindest zwei Einspeiseprofile für den Erzeuger hinterlegt sind, und
- wobei das Anpassen des Einspeiseprofils des Erzeugers die Auswahl eines der hinterlegten Einspeiseprofile umfasst.

20. System umfassend zumindest einen Verbraucher (110, 140) nach Anspruch 17 und zumindest einen Erzeuger (130) nach Anspruch 18 und zumindest eine Kommunikationsplattform (150) nach Anspruch 19.

## Claims

1. Method, comprising:
- grouping (205) into a group (110, 130, 140) at least one producer (130) and at least one consumer (110, 140) which are connected to an electrical network (101-107); the group (110, 130, 140) comprising at least two group members (110, 130, 140); **characterized in that** the method comprises:
- providing (202) load profiles (308, 309) by the consumers (110, 140) of the group (110, 130, 140) on a communication platform (150);
- providing (203) feed-in profiles (303) by the producers (130) of the group (110, 130, 140) on the communication platform (150);
- providing (206) a predetermined group profile (302) on the communication platform (150);
- consumer-side retrieving (207) of the load profiles (308, 309), the feed-in profiles (303) and the group profile (302), and consumer-side adapting (208) of the load profile (308, 309) of the respective consumer (110), 140) of the group (110, 130, 140) based on the retrieved load profiles (308, 309), the retrieved feed-in profiles (303) and the retrieved group profile (302) and producer-side retrieving (207) of the load profiles (308), 309), the feed-in profiles (303) and the group profile (302), and producer-side adapting (208) of the feed-in profile (303) of the respective producer (130) of the group (110, 130, 140) based on the retrieved load profiles (308, 309), the retrieved feed-in profiles (303) and the retrieved group profile (302), and
- wherein at least a part of the consumers (110, 140) and producers (130) of the group (110, 130, 140) are provided with rules which specify how the respective load profile (308, 309) or producer profile (303) is to be adapted as a function of the retrieved load profiles (308, 309), the retrieved feed-in profiles (303) and the retrieved group profile (302),
- wherein degrees of freedom (P_{Bat,max}, P_{Bat,min}, tₙₘₐₓ, tₘᵢₙ) are specified for at least one consumer (140) of the group (110, 130, 140), within which the load profile (309) of the consumer can be adapted, and wherein degrees of freedom are specified for at least one producer (130) of the group (110, 130, 140), within which the feed-in profile (303) of the producer (130) can be adapted, and
- wherein at least a part of the consumers (110, 140) and/or producers (130) of the group (110, 130, 140) are given priorities, wherein the consumers and producers (130) with the lowest priority initially adapt their load profile and feed-in profile, respectively,
- wherein storage means are assigned to a consumer of the group in which at least two load profiles for the consumer are stored,
- wherein the adapting of the load profile of the consumer comprising the selection of one of the stored load profiles, and
- wherein storage means are assigned to a producer of the group in which at least two feed-in profiles for the producer are stored, and
- wherein the adapting of the feed-in profile of the producer comprises the selection of one of the stored feed-in profiles.

2. Method according to claim 1, **characterized in that** at least one load profile and/or at least one feed-in profile is described by time power value pairs.

3. Method according to claim 1 or 2, **characterized in that** at least one load profile is based on a load forecast and/or at least one feed-in profile is based on a feed-in forecast.

4. Method according to one of the claims 1 to 3, **characterized in that** at least one load profile is described by expected maximum and/or minimum power consumption values and/or at least one feed-in profile is described by expected maximum and/or minimum power output values.

5. Method according to one of the claims 1 to 4, **characterized in that** the consumers (110, 140) provide (209) their adapted load profiles (310) and/or the producers (130) provide (209) their adapted feed-in profiles on the communication platform (150).

6. Method according to one of the claims 1 to 5, **characterized in that** the grouping (205) of consumers (110, 140) and/or producers (130) into a group (110, 130, 140) takes place on the basis of the topology of the electrical network (101-107).

7. Method according to one of the claims 1 to 6, **characterized in that** consumers (110, 140) and producers (130) provide (202, 203) identification data, in particular localization data, on the communication platform (150), on the basis of which the consumers (110, 140) and producers (130) are grouped (205) to form a group (110, 130, 140).

8. Method according to claim 7, **characterized in that** the identification data provided on the communication platform (150) are repeatedly queried (204) and, if required, the associated consumers (110, 140) and producers (140) are regrouped (205) on the basis of the queried identification data.

9. Method according to one of the claims 1 to 8, **characterized in that** a selection process (201) is carried out, in particular on the basis of user instructions, wherein the process decides whether a consumer (110, 120, 140) or producer (130) is assigned to a group (110, 130, 140).

10. Method according to any one of claims 1 to 9, **characterized in that** the degrees of freedom for a consumer (140) are determined by the energy to be drawn by the consumer (140) from the electrical network (101-107) within a specified maximum period (tₘₐₓ-tₘᵢₙ).

11. Method according to one of the claims 1 to 10, **characterized in that** reliability information is specified in the load profile (308, 309) for at least one consumer of the group (110, 130, 140) and/or reliability information (304, 305) is specified in the feed-in profile (303) for at least one producer (130) of the group (110, 130, 140).

12. Method according to one of claims 1 to 11, **characterized in that** regenerative producers (130) are assigned a higher priority than non-regenerative producers.

13. Method according to one of claims 1 to 12, **characterized in that** the power flow caused by consumers (120) and/or producers which are not assigned to a group (110, 130, 140) is taken into account in the group profile (302).

14. Method according to one of claims 1 to 13, **characterized in that** the group profile (302) is adapted based on a status detection of at least a part of the electrical network (101-107).

15. Control means (111, 160) for a consumer (110, 140) connectable to an electrical network (101-107) and groupable into a group (110, 130, 140) comprising at least two group members (110, 130, 140), **characterized in that**
- the control means (111, 160) are configured to cause communication means (112, 160) associated with the consumer (110, 140) to provide a load profile (308, 309) of the consumer on a communication platform (150) on which further feed-in profiles (303) of producers (130) grouped to the group (110, 130, 140) can be provided, which are connected to the electrical network (101-107), load profiles (308, 309) of possible further consumers (110, 140) of the group (110, 130, 140) can be provided and a predetermined group profile (302) can be provided;
- the control means (111, 160) are configured to cause the communication means (112, 160) to retrieve the load profiles (308, 309), the feed-in profiles (303) and the group profile (302) from the communication platform (150);
- the control means (111, 160) are configured to adapt the load profile (308, 309) of the consumer (110, 140) based on the retrieved load profiles (308, 309), the retrieved feed-in profiles (303) and the retrieved group profile (302),
- wherein rules are defined on side part of the consumer (110, 140) which specify how the respective load profile (308, 309) is to be adapted as a function of the retrieved load profiles (308, 309), the retrieved feed-in profiles (303) and the retrieved group profile (302),
- wherein degrees of freedom (P_{Bat,max}, P_{Bat,min}, tₙₘₐₓ, tₘᵢₙ) within which the load profile (309) of the consumer can be adapted are specified for at least one consumer (140) of the group (110, 130, 140), and
- wherein at least a part of the consumers (110, 140) of the group (110, 130, 140) is given priorities, the consumers with the lowest priority initially adapting their load profiles and feed-in profiles, respectively,
- wherein storage means are assigned to the consumer in which at least two load profiles for the consumer are stored,
- wherein adapting the load profile of the consumer comprises the selection of one of the stored load profiles.

16. Control means (133) for a producer (130) connectable to an electrical network (101-107) and groupable into a group (110, 130, 140) comprising at least two group members, **characterized in that**
- the control means (133) are configured to cause communication means (134) associated with the producer (130) to provide a feed-in profile (303) of the producer (130) on a communication platform (150) on which further load profiles (308, 309) of consumers (110, 140) grouped to the group (110, 130, 140) can be provided, which are connected to the electrical network (101-107), feed-in profiles of possible further producers of the group (110, 130, 140) can be provided and a predetermined group profile (302) can be provided;
- the control means (133) are configured to cause the communication means (134) to retrieve the load profiles (308, 309), the feed-in profiles (303) and the group profile (302) from the communication platform (150);
- the control means (133) are configured to adapt the feed-in profile (303) of the producer (130) based on the retrieved load profiles (308, 309), the retrieved feed-in profiles (303) and the retrieved group profile (302),
- wherein rules are defined on the side of the producer (130) which specify how the respective producer profile (303) is to be adapted as a function of the retrieved load profiles (308, 309), the retrieved feed-in profiles (303) and the retrieved group profile (302),
- wherein degrees of freedom are specified for at least one producer (130) of the group (110, 130, 140) within which the feed-in profile (303) of the producer (130) can be adapted, and
- wherein at least a part of the producers (130) of the group (110, 130, 140) is given priorities, the producers (130) with the lowest priority initially adapting their load profiles and feed-in profiles, respectively,
- wherein storage means are assigned to the producer in which at least two feed-in profiles for the producer are stored,
- wherein adapting the feed-in profile of the producer comprises the selection of one of the stored feed-in profiles.

17. Consumer (110, 140), **characterized in that**
- the consumer (110, 140) is connectable to an electrical network (101-107) and is groupable into a group (110, 130, 140) comprising at least two group members (110, 130, 140);
- communication means (112, 134) are associated with the consumer (110, 140), said communication means are configured to provide a load profile (308, 309) of the consumer (110, 140) on a communication platform (150) on which further feed-in profiles (303) of producers (130) grouped to the group (110, 130, 140) can be provided, which are connected to the electrical network (101-107), load profiles (308, 309) of possible further consumers (110, 140) of the group (110, 130, 140) can be provided and a predetermined group profile (302) can be provided, and which are configured to retrieve the load profiles (308, 309), the feed-in profiles (303) and the group profile (302) from the communication platform (150);
- control means (111, 133) according to claim 15 are associated with the consumer (110, 140) and configured to adapt the load profile (308, 309) of the consumer (110, 140) based on the retrieved load profiles (308, 309), the retrieved feed-in profiles (303) and the retrieved group profile (302),
- wherein rules are defined on the side of the consumer (110, 140) which specify how the respective load profile (308, 309) is to be adapted as a function of the retrieved load profiles (308, 309), the retrieved feed-in profiles (303) and the retrieved group profile (302),
- wherein degrees of freedom (P_{Bat,max}, P_{Bat,min}, tₙₘₐₓ, tₘᵢₙ) within which the load profile (309) of the consumer can be adapted are specified for at least one consumer (140) of the group (110, 130, 140), and
- wherein at least a part of the consumers (110, 140) of the group (110, 130, 140) is given priorities, the consumers with the lowest priority initially adapting their load profiles and feed-in profiles, respectively,
- wherein storage means are assigned to the consumer in which at least two load profiles for the consumer are stored,
- wherein adapting the load profile of the consumer comprises the selection of one of the stored load profiles.

18. Producer (130), **characterized in that**
- the producer (130) is connectable to an electrical network (101-107) and is groupable into a group (110, 130, 140) comprising at least two group members (110, 130, 140);
- communication means (160) are associated with the producer (130) and are configured to provide a feed-in profile (303) of the producer on a communication platform (150) on which further load profiles (308, 309) of consumers (110, 140) grouped to the group (110, 130, 140) can be provided, which are connected to the electrical network (101-107), feed-in profiles of possible further producers of the group (110, 130, 140) can be provided and a predetermined group profile (302) can be provided, and which are configured to retrieve the load profiles (308, 309), the feed-in profiles (303) and the group profile (302) from the communication platform (150);
- control means (111, 133) according to claim 16 are associated with the producer (130) which are configured to adapt the feed-in profile (303) of the producer (130) based on the retrieved load profiles (308, 309), the retrieved feed-in profiles (303) and the retrieved group profile (302),
- wherein rules are defined on the side of the producer (130) which specify how the respective producer profile (303) is to be adapted as a function of the retrieved load profiles (308, 309), the retrieved feed-in profiles (303) and the retrieved group profile (302),
- wherein degrees of freedom are specified for at least one producer (130) of the group (110, 130, 140) within which the feed-in profile (303) of the producer (130) can be adapted, and
- wherein at least a part of the producers (130) of the group (110, 130, 140) being given priorities, the producers (130) with the lowest priority initially adapting their load profiles and feed-in profiles, respectively,
- wherein storage means are assigned to the producer in which at least two feed-in profiles for the producer are stored,
- wherein adapting the feed-in profile of the producer comprises the selection of one of the stored feed-in profiles.

19. Communication platform (150), **characterized in that**
- load profiles (308, 309) of consumers (110, 140) and feed-in profiles (303) of producers (130) can be provided on the communication platform (150), wherein the consumers (110, 140) and the producers (130) are connected to an electrical network (101-107) and are grouped into a group (110, 130, 140), the group (110, 130,140) comprising at least two group members (110, 130, 140), and on which a predetermined group profile (302) can be provided;
- the load profiles (308, 309), the feed-in profiles (303) and the group profile (302) are retrievable on the consumer side from the communication platform (150) for adapting the load profile (308, 309) on the consumer side of the respective consumer (110, 140) of the group (110, 130, 140) based on the retrieved load profiles (308, 309), the retrieved feed-in profiles (303) and the retrieved group profile (302) and
- the load profiles (308, 309), the feed-in profiles (303) and the group profile (302) are retrievable on the producer side from the communication platform (150) for adapting the feed-in profile (308, 309) on the producer side of the respective producer (130) of the group (110, 130, 140) based on the retrieved load profiles (308, 309), the retrieved feed-in profiles (303) and the retrieved group profile (302) and,
- wherein at least for a part of the consumers (110, 140) and producers (130) of the group (110, 130, 140) rules are definable which specify how the respective load profile (308, 309) or producer profile (303) is to be adapted as a function of the retrieved load profiles (308, 309), the retrieved feed-in profiles (303) and the retrieved group profile (302),
- degrees of freedom (P_{Bat,max}, P_{Bat,min}, tₙₘₐₓ, tₘᵢₙ) are specified for at least one consumer (140) of the group (110, 130, 140), within which the load profile (309) of the load can be adapted, and/or degrees of freedom are specified for at least one producer (130) of the group (110, 130, 140), within which the feed-in profile (303) of the producer (130) can be adapted, and
- at least a part of the consumers (110, 140) and/or producers (130) of the group (110, 130, 140) is given priorities, the consumers and/or producers (130) with the lowest priority initially adapting their load profiles and feed-in profiles, respectively,
- wherein storage means are assigned to a consumer of the group in which at least two load profiles for the consumer are stored,
- wherein the adapting of the load profile of the consumer comprising the selection of one of the stored load profiles, and
- wherein storage means are assigned to a producer of the group in which at least two feed-in profiles for the producer are stored, and
- wherein the adapting of the feed-in profile of the producer comprises the selection of one of the stored feed-in profiles.

20. System comprising at least one consumer (110, 140) according to claim 17 and at least one producer (130) according to claim 18 and at least one communication platform (150) according to claim 19.

## Revendications

1. Procédé comprenant :
- le groupement (205) au moins d'un producteur (130) et au moins d'un consommateur (110, 140) qui sont raccordés à un réseau électrique (101 - 107), pour former un groupe (110, 130, 140) ; où le groupe (110, 130, 140) comprend au moins deux membres (110, 130, 140) du groupe ;
**caractérisé en ce que** le procédé consiste :
- à fournir (202) à une plateforme de communication (150), des profils de charge (308, 309) par les consommateurs (110, 140) du groupe (110, 130, 140) ;
- à fournir (203) à la plateforme de communication (150), des profils d'alimentation (303) par les producteurs (130) du groupe (110, 130, 140) ;
- à fournir (206) à la plateforme de communication (150), un profil de groupe prédéfini (302) ;
- à demander (207), côté consommateur, les profils de charge (308, 309), les profils d'alimentation (303) et le profil de groupe (302) et à ajuster (208), côté consommateur, le profil de charge (308, 309) du consommateur respectif (110, 140) du groupe (110, 130, 140) en se basant sur les profils de charge demandés (308, 309), sur les profils d'alimentation demandés (303) et sur le profil de groupe demandé (302) et à demander (207), côté producteur, les profils de charge (308, 309), les profils d'alimentation (303) et le profil de groupe (302), et à ajuster (208), côté producteur, le profil d'alimentation (303) du producteur respectif (130) du groupe (110, 130, 140) en se basant sur les profils de charge demandés (308, 309), sur les profils d'alimentation demandés (303) et sur le profil de groupe demandé (302), et
- où au moins du côté d'une partie des consommateurs (110, 140) et des producteurs (130) du groupe (110, 130, 140) sont fixées des règles qui prédéfinissent, comme en fonction des profils de charge demandés (308, 309), des profils d'alimentation demandés (303) et du profil de groupe demandé (302), l'ajustement du profil de charge respectif (308, 309) ou du profil d'alimentation (303) devant être effectué,
- où pour au moins un consommateur (140) du groupe (110, 130, 140) sont indiqués des degrés de liberté (P_{Bat,max}, P_{Bat,min}, tₙₘₐₓ, tₘᵢₙ) à l'intérieur desquels peut être ajusté le profil de charge (309) du consommateur, et pour au moins un producteur (130) du groupe (110, 130, 140) sont indiqués des degrés de liberté à l'intérieur desquels peut être ajusté le profil d'alimentation (303) du producteur (130), et
- où, au moins pour une partie des consommateurs (110, 140) et des producteurs (130) du groupe (110, 130, 140), des priorités sont prédéfinies, où en premier lieu les consommateurs et les producteurs (130) ajustent, avec la priorité la plus basse, leurs profils de charge ou d'alimentation,
- où des moyens formant accumulateurs sont associés à un consommateur du groupe, moyens formant accumulateurs dans lesquels sont stockés en mémoire au moins deux profils de charge pour le consommateur,
- où l'ajustement du profil de charge du consommateur comprend la sélection de l'un des profils de charge stockés en mémoire, et
- où des moyens formant accumulateurs sont associés à un producteur, moyens formant accumulateurs dans lesquels sont stockés en mémoire au moins deux profils d'alimentation pour le producteur, et
- où l'ajustement du profil d'alimentation du producteur comprend la sélection de l'un des profils d'alimentation stockés en mémoire.

2. Procédé selon la revendication 1, **caractérisé en ce qu'**au moins un profil de charge et/ou au moins un profil d'alimentation est décrit par des paires de valeurs de temps et de performance.

3. Procédé selon la revendication 1 ou 2, **caractérisé en ce qu'**au moins un profil de charge est basé sur une prévision de charge et/ou au moins un profil d'alimentation est basé sur une prévision d'alimentation.

4. Procédé selon l'une quelconque des revendications 1 à 3, **caractérisé en ce qu'**au moins un profil de charge est décrit par des valeurs maximales et/ou minimales devant être attendues de la puissance absorbée et/ou au moins un profil d'alimentation est décrit par des valeurs maximales et/ou minimales devant être attendues de la puissance de sortie.

5. Procédé selon l'une quelconque des revendications 1 à 4, **caractérisé en ce que** les consommateurs (110, 140) fournissent (209) à la plateforme de communication (150), leurs profils de charge ajustés (310) et/ou les producteurs (130) fournissent à cette même plateforme de communication leurs profils d'alimentation ajustés.

6. Procédé selon l'une quelconque des revendications 1 à 5, **caractérisé en ce que** le groupement (205) de consommateurs (110, 140) et/ou de producteurs (130) pour former un groupe (110, 130, 140) est réalisé sur la base de la topologie du réseau électrique (101 - 107).

7. Procédé selon l'une quelconque des revendications 1 à 6, **caractérisé en ce que** des consommateurs (110, 140) et des producteurs (130) fournissent (202, 203) à la plateforme de communication (150), des données d'identification, en particulier des données de localisation, à l'aide desquelles le groupement (205) des consommateurs (110, 140) et des producteurs (130) est réalisé pour former un groupe (110, 130, 140).

8. Procédé selon la revendication 7, **caractérisé en ce que** les données d'identification fournies à la plateforme de communication (150) sont analysées (204) de manière répétée et, en cas de besoin, un groupement renouvelé (205) des consommateurs (110, 140) et des producteurs (140), qui en font partie, est réalisé à l'aide des données d'identification analysées.

9. Procédé selon l'une quelconque des revendications 1 à 8, **caractérisé en ce qu'**un processus de sélection (201) se produit en étant réalisé, en particulier, sur la base de données d'utilisateurs, lequel processus de sélection décide du fait de savoir si un consommateur (110, 120, 140) ou un producteur (130) est associé à un groupe (110, 130, 140).

10. Procédé selon l'une quelconque des revendications 1 à 9, **caractérisé en ce que** les degrés de liberté pour un consommateur (140) sont fixés par l'énergie devant être prélevée, par le consommateur (140), sur le réseau électrique (101 - 107), à l'intérieur d'un laps de temps maximum fixé (tₘₐₓ - tₘᵢₙ).

11. Procédé selon l'une quelconque des revendications 1 à 10, **caractérisé en ce que** des informations de fiabilité sont indiquées dans le profil de charge (308, 309) pour au moins un consommateur du groupe (110, 130, 140) et/ou des informations de fiabilité (304, 305) sont indiquées dans le profil d'alimentation (303) pour au moins un producteur (130) du groupe (110, 130, 140).

12. Procédé selon l'une quelconque des revendications 1 à 11, **caractérisé en ce qu'**une priorité supérieure est affectée à des producteurs régénérateurs (130) comme à des producteurs non régénérateurs.

13. Procédé selon l'une quelconque des revendications 1 à 12, **caractérisé en ce que**, dans le profil de groupe (302), est pris en considération le flux de puissance provoqué par des consommateurs (120) et/ou par des producteurs qui ne sont associés à aucun groupe (110, 130, 140).

14. Procédé selon l'une quelconque des revendications 1 à 13, **caractérisé en ce que** le profil de groupe (302) est ajusté en se basant sur une détection d'état d'au moins une partie du réseau électrique (101 - 107).

15. Moyens de commande (111, 160) pour un consommateur (110, 140) qui peut être raccordé à un réseau électrique (101 - 107) et qui peut être groupé pour former un groupe (110, 130, 140) comprenant au moins deux membres (110, 130, 140) du groupe,
**caractérisé**
- **en ce que** les moyens de commande (111, 160) sont agencés pour faire en sorte que des moyens de communication (112, 160) associés au consommateur (110, 140) fournissent à une plateforme de communication (150) un profil de charge (308, 309) du consommateur, plateforme de communication à laquelle peuvent être fournis en outre des profils d'alimentation (303) de producteurs (130) groupés pour former le groupe (110, 130, 140), producteurs qui sont raccordés au réseau électrique (101 - 107), plateforme de communication à laquelle peuvent être fournis des profils de charge (308, 309) d'autres consommateurs possibles (110, 140) du groupe (110, 130, 140), et plateforme de communication à laquelle peut être fourni un profil de groupe prédéfini (302) ;
- **en ce que** les moyens de commande (111, 160) sont agencés pour faire en sorte que les moyens de communication (112, 160) demandent, depuis la plateforme de communication (150), les profils de charge (308, 309), les profils d'alimentation (303) et le profil de groupe (302) ;
- **en ce que** les moyens de commande (111, 160) sont agencés pour ajuster le profil de charge (308, 309) du consommateur (110, 140), en se basant sur les profils de charge demandés (308, 309), sur les profils d'alimentation demandés (303) et sur le profil de groupe demandé (302),
- où du côté du consommateur (110, 140) sont fixées des règles qui prédéfinissent, comme en fonction des profils de charge demandés (308, 309), des profils d'alimentation demandés (303) et du profil de groupe demandé (202), l'ajustement du profil de charge respectif (308, 309) devant être réalisé,
- où pour au moins un consommateur (140) du groupe (110, 130, 140) sont indiqués des degrés de liberté (P_{Bat,max}, P_{Bat,min}, tₙₘₐₓ, tₘᵢₙ) à l'intérieur desquels peut être ajusté le profil de charge (309) du consommateur, et
- où, au moins pour une partie des consommateurs (110, 140) du groupe (110, 130, 140), des priorités sont prédéfinies, où en premier lieu les consommateurs ajustent, avec la priorité la plus basse, leurs profils de charge ou d'alimentation,
- où des moyens formant accumulateurs sont associés au consommateur, moyens formant accumulateurs dans lesquels sont stockés en mémoire au moins deux profils de charge pour le consommateur,
- où l'ajustement du profil de charge du consommateur comprend la sélection de l'un des profils de charge stockés en mémoire.

16. Moyens de commande (133) pour un producteur (130) qui peut être raccordé à un réseau électrique (101 - 107) et qui peut être groupé pour former un groupe (110, 130, 140) comprenant au moins deux membres du groupe,
**caractérisé**
- **en ce que** les moyens de commande (133) sont agencés pour que des moyens de communication (134) associés au producteur (130) fournissent à une plateforme de communication (150), un profil d'alimentation (303) du producteur (130), plateforme de communication à laquelle peuvent être fournis en outre des profils de charge (308, 309) de consommateurs (110, 140) groupés pour former le groupe (110, 130, 140), consommateurs qui sont raccordés au réseau électrique (101 - 107), plateforme de communication à laquelle peuvent être fournis des profils d'alimentation d'autres producteurs possibles du groupe (110, 130, 140), et plateforme de communication à laquelle peut être fourni un profil de groupe prédéfini (302) ;
- **en ce que** les moyens de commande (133) sont agencés pour faire en sorte que les moyens de communication (134) demandent, depuis la plateforme de communication (150), les profils de charge (308, 309), les profils d'alimentation (303) et le profil de groupe (302) ;
- **en ce que** les moyens de commande (133) sont agencés pour ajuster le profil d'alimentation (303) du producteur (130), en se basant sur les profils de charge demandés (308, 309), sur les profils d'alimentation demandés (303) et sur le profil de groupe demandé (302),
- où du côté du producteur (130) sont fixées des règles qui prédéfinissent, comme en fonction des profils de charge demandés (308, 309), des profils d'alimentation demandés (303) et du profil de groupe demandé (302), l'ajustement du profil d'alimentation respectif (303) devant être réalisé,
- où pour au moins un producteur (130) du groupe (110, 130, 140) sont indiqués des degrés de liberté à l'intérieur desquels peut être ajusté le profil d'alimentation (303) du producteur (130), et
- où, au moins pour une partie des producteurs (130) du groupe (110, 130, 140), des priorités sont prédéfinies, où en premier lieu les producteurs (130) ajustent, avec la priorité la plus basse, leurs profils de charge ou d'alimentation,
- où des moyens formant accumulateurs sont associés au producteur, moyens formant accumulateurs dans lesquels sont stockés en mémoire au moins deux profils d'alimentation pour le producteur,
- où l'ajustement du profil d'alimentation du producteur comprend la sélection de l'un des profils d'alimentation stockés en mémoire.

17. Consommateur (110, 140),
**caractérisé**
- **en ce que** le consommateur (110, 140) peut être raccordé à un réseau électrique (101 - 107) et peut être groupé pour former un groupe (110, 130, 140) comprenant au moins deux membres (110, 130, 140) du groupe ;
- **en ce que** des moyens de communication (112, 134) sont associés au consommateur (110, 140), moyens de communication qui sont agencés pour fournir à une plateforme de communication (150), un profil de charge (308, 309) du consommateur (110, 140), plateforme de communication à laquelle peuvent être fournis en outre des profils d'alimentation (303) de producteurs (130) groupés pour former le groupe (110, 130, 140), producteurs qui sont raccordés au réseau électrique (101 - 107), plateforme de communication à laquelle peuvent être fournis des profils de charge (308, 309) d'autres consommateurs possibles (110, 140) du groupe (110, 130, 140), et plateforme de communication à laquelle peut être fourni un profil de groupe prédéfini (302), lesdits moyens de communication étant agencés pour demander, depuis la plateforme de communication (150), les profils de charge (308, 309), les profils d'alimentation (303) et le profil de groupe (302) ;
- **en ce que** des moyens de commande (111, 133) selon la revendication 15 sont associés au consommateur (110, 140), lesquels moyens de commande sont agencés pour ajuster le profil de charge (308, 309) du consommateur (110, 140), en se basant sur les profils de charge demandés (308, 309), sur les profils d'alimentation demandés (303) et sur le profil de groupe demandé (302),
- où du côté du consommateur (110, 140) sont fixées des règles qui prédéfinissent, comme en fonction des profils de charge demandés (308, 309), des profils d'alimentation demandés (303) et du profil de groupe demandé (302), l'ajustement du profil de charge respectif (308, 309) devant être réalisé,
- où pour au moins un consommateur (140) du groupe (110, 130, 140) sont indiqués des degrés de liberté (P_{Bat,max}, P_{Bat,min}, tₙₘₐₓ, tₘᵢₙ) à l'intérieur desquels peut être ajusté le profil de charge (309) du consommateur, et
- où, au moins pour une partie des consommateurs (110, 140) du groupe (110, 130, 140), des priorités sont prédéfinies, où en premier lieu les consommateurs ajustent, avec la priorité la plus basse, leurs profils de charge ou d'alimentation,
- où des moyens formant accumulateurs sont associés au consommateur, moyens formant accumulateurs dans lesquels sont stockés en mémoire au moins deux profils de charge pour le consommateur,
- où l'ajustement du profil de charge du consommateur comprend la sélection de l'un des profils de charge stockés en mémoire.

18. Producteur (130),
**caractérisé**
- **en ce que** le producteur (130) peut être raccordé à un réseau électrique (101 - 107) et peut être groupé pour former un groupe (110, 130, 140) comprenant au moins deux membres (110, 130, 140) du groupe ;
- **en ce que** des moyens de communication (160) sont associés au producteur (130), moyens de communication qui sont agencés pour fournir à une plateforme de communication (150), un profil d'alimentation (303) du producteur, plateforme de communication à laquelle peuvent être fournis en outre des profils de charge (308, 309) de consommateurs (110, 140) groupés pour former le groupe (110, 130, 140), consommateurs qui sont raccordés au réseau électrique (101 - 107), plateforme de communication à laquelle peuvent être fournis des profils d'alimentation d'autres producteurs possibles du groupe, et plateforme de communication à laquelle peut être fourni un profil de groupe prédéfini (302), lesdits moyens de communication étant agencés pour demander, depuis la plateforme de communication (150), les profils de charge (308, 309), les profils d'alimentation (303) et le profil de groupe (302) ;
- **en ce que** des moyens de commande (160) selon la revendication 16 sont associés au producteur (130), lesquels moyens de commande sont agencés pour ajuster le profil d'alimentation (303) du producteur (130), en se basant sur les profils de charge demandés (308, 309), sur les profils d'alimentation demandés (303) et sur le profil de groupe demandé (302),
- où du côté du producteur (130) sont fixées des règles qui prédéfinissent, comme en fonction des profils de charge demandés (308, 309), des profils d'alimentation demandés (303) et du profil de groupe demandé (302), l'ajustement du profil d'alimentation respectif (303) devant être réalisé,
- où pour au moins un producteur (130) du groupe (110, 130, 140) sont indiqués des degrés de liberté à l'intérieur desquels peut être ajusté le profil d'alimentation (303) du producteur (130), et
- où, au moins pour une partie des producteurs (130) du groupe (110, 130, 140), des priorités sont prédéfinies, où en premier lieu les producteurs (130) ajustent, avec la priorité la plus basse, leurs profils de charge ou d'alimentation,
- où des moyens formant accumulateurs sont associés au producteur, moyens formant accumulateurs dans lesquels sont stockés en mémoire au moins deux profils d'alimentation pour le producteur,
- où l'ajustement du profil d'alimentation du producteur comprend la sélection de l'un des profils d'alimentation stockés en mémoire.

19. Plateforme de communication (150),
**caractérisée**
- **en ce que** des profils de charge (308, 309) de consommateurs (110, 140) et des profils d'alimentation (303) de producteurs (130) peuvent être fournis à la plateforme de communication (150), où les consommateurs (110, 140) et les producteurs (130) sont raccordés à un réseau électrique (101 - 107) et sont groupés pour former un groupe (110, 130, 140), où le groupe (110, 130, 140) comprend au moins deux membres (110, 130, 140) du groupe, et plateforme de communication à laquelle peut être fourni un profil de groupe prédéfini (302) ;
- **en ce que** les profils de charge (308, 309), les profils d'alimentation (303) et le profil de groupe (302) peuvent être demandés, côté consommateurs, depuis la plateforme de communication (150), pour l'ajustement, côté consommateurs, du profil de charge (308, 309) du consommateur respectif (110, 140) du groupe (110, 130, 140), en se basant sur les profils de charge demandés (308, 309), sur les profils d'alimentation demandés (303) et sur le profil de groupe demandé (302), et les profils de charge (308, 309), les profils d'alimentation (303) et le profil de groupe (302) peuvent être demandés, côté producteurs, depuis la plateforme de communication (150), pour l'ajustement, côté producteurs, du profil d'alimentation (303) du producteur respectif (130) du groupe (110, 130, 140), en se basant sur les profils de charge demandés (308, 309), sur les profils d'alimentation demandés (303) et sur le profil de groupe demandé (302),
- où au moins du côté d'une partie des consommateurs (110, 140) et des producteurs (130) du groupe (110, 130, 140) peuvent être fixées des règles qui prédéfinissent, comme en fonction des profils de charge demandés (308, 309), des profils d'alimentation demandés (303) et du profil de groupe demandé (302), l'ajustement du profil de charge respectif (308, 309) ou du profil d'alimentation (303) devant être réalisé,
- où pour au moins un consommateur (140) du groupe (110, 130, 140) sont indiqués des degrés de liberté (P_{Bat,max}, P_{Bat,min}, tₙₘₐₓ, tₘᵢₙ) à l'intérieur desquels peut être ajusté le profil de charge (309) du consommateur, et pour au moins un producteur (130) du groupe (110, 130, 140) sont indiqués des degrés de liberté à l'intérieur desquels peut être ajusté le profil d'alimentation (303) du producteur (130), et
- où, au moins pour une partie des consommateurs (110, 140) et des producteurs (130) du groupe (110, 130, 140), des priorités sont prédéfinies, où en premier lieu les consommateurs et/ou les producteurs (130) ajustent, avec la priorité la plus basse, leurs profils de charge ou d'alimentation,
- où des moyens formant accumulateurs sont associés à un consommateur du groupe, moyens formant accumulateurs dans lesquels sont stockés en mémoire au moins deux profils de charge pour le consommateur,
- où l'ajustement du profil de charge du consommateur comprend la sélection de l'un des profils de charge stockés en mémoire, et
- où des moyens formant accumulateurs sont associés à un producteur du groupe, moyens formant accumulateurs dans lesquels sont stockés en mémoire au moins deux profils d'alimentation pour le producteur, et
- où l'ajustement du profil d'alimentation du producteur comprend la sélection de l'un des profils d'alimentation stockés en mémoire.

20. Système comprenant au moins un consommateur (110, 140) selon la revendication 17 et au moins un producteur (130) selon la revendication 18, et comprenant au moins une plateforme de communication (150) selon la revendication 19.
